(19) Europäisches Patentamt
European Patent Office
Office européen des brevets

(11) **EP 3 786 862 A1**

(12) **EUROPEAN PATENT APPLICATION**
published in accordance with Art. 153(4) EPC

(43) Date of publication:
**03.03.2021 Bulletin 2021/09**

(51) Int Cl.:
**G06Q 10/04** (2012.01)    **G06Q 30/02** (2012.01)

(21) Application number: **19792221.4**

(22) Date of filing: **16.04.2019**

(86) International application number:
**PCT/JP2019/016261**

(87) International publication number:
**WO 2019/208319 (31.10.2019 Gazette 2019/44)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **27.04.2018 JP 2018087389**

(71) Applicant: **Panasonic Intellectual Property Management Co., Ltd.**
**Osaka-shi, Osaka 540-6207 (JP)**

(72) Inventors:
• **MIYATA, Atsushi**
  **Osaka 540-6207 (JP)**
• **ITOH, Tomoaki**
  **Osaka 540-6207 (JP)**
• **OKIMOTO, Yoshiyuki**
  **Osaka 540-6207 (JP)**
• **SHIN, Hidehiko**
  **Osaka 540-6207 (JP)**

(74) Representative: **Eisenführ Speiser**
**Patentanwälte Rechtsanwälte PartGmbB**
**Postfach 10 60 78**
**28060 Bremen (DE)**

(54) **PREDICTION DEVICE, PREDICTION METHOD, AND PROGRAM**

(57)    The present disclosure provides a prediction device, a prediction method, and a program for predicting effective measures. The prediction device (1) includes a storage unit (14) storing measure implementation information (144) showing an effect of measures on a first target having a measure already implemented therein, and a control unit (13) predicting an effect of measures on a second target having no measure implemented therein based on the measure implementation information; the control unit constructs a first graph (450A to 450D) made up of a plurality of nodes including at least one first node associated with the first target and at least one second node associated with the second target, and a plurality of links connecting the nodes based on a similarity between the nodes; and based on the measure implementation information, the control unit determines a degree of the effect of the measures on the first node and propagates the degree of the effect of the measures on the second node by using the first node as a base point in the first graph.

FIG.2

## Description

### TECHNICAL FIELD

The present disclosure relates to a prediction device, a prediction method, and a program for predicting an effect of measures.

### BACKGROUND ART

Patent Document 1 discloses a purchase prediction analysis system. The purchase prediction analysis system performs a cluster analysis of a region with multiple factors to calculate a ratio of commodity purchase for each cluster. The purchase prediction analysis system determines adoption/non-adoption of the calculated commodity purchase ratio based on predetermined criteria. The purchase prediction analysis system sets the commodity purchase ratio of a region of the cluster adopting the commodity purchase ratio as an objective variable and a factor score of the region as an explanatory variable to generate a prediction model that is a computation expression of multiple regression analysis. The purchase prediction analysis system uses the generated computation expression to calculate and predict the commodity purchase ratios for all the regions from the explanatory variables of the regions. As a result, an appropriate commodity purchase ratio can be predicted even in a region where the commodity purchase ratio cannot appropriately be obtained.

### PRIOR ART DOCUMENT

### PATENT DOCUMENT

Patent Document 1: Japanese Laid-Open Patent Publication No. 2016-6621

### SUMMARY

### TECHNICAL PROBLEM

The present disclosure provides a prediction device, a prediction method, and a program for predicting effective measures.

### SOLUTION TO PROBLEM

The prediction device of the present disclosure includes a storage unit storing measure implementation information showing an effect of measures on a first target having measures already implemented therein, and a control unit predicting an effect of measures on a second target having no measure implemented therein based on the measure implementation information. The control unit constructs a first graph made up of a plurality of nodes including at least one first node associated with the first target and at least one second node associated with the second target, and a plurality of links connecting the nodes based on a similarity between the nodes, and based on the measure implementation information, the control unit determines a degree of the effect of the measures on the first node and propagates the degree of the effect of the measures on the second node by using the first node as a base point in the first graph.

These general and specific aspects may be implemented by a system, a method, and a computer program, as well as a combination thereof.

### ADVANTAGEOUS EFFECT OF INVENTION

According to the prediction device, the prediction method, and the program of the present disclosure, the graph including nodes and links is used to propagate a degree of the effect of measures, so that effective measures can be predicted for a target having no measure implemented therein.

### BRIEF DESCRIPTION OF DRAWINGS

[Fig. 1] Fig. 1 is a block diagram showing configurations of a prediction device and a terminal device.
[Fig. 2] Fig. 2 is a diagram showing a functional configuration of a control unit and data stored in a storage unit at the time of learning.

[Fig. 3] Fig. 3 is a diagram showing an example of ID-POS data.
[Fig. 4] Fig. 4 is a diagram showing an example of customer data.
[Fig. 5] Fig. 5 is a diagram showing an example of district data.
[Fig. 6] Fig. 6 is a diagram showing an example of purchase data before measure implementation.
[Fig. 7] Fig. 7 is a diagram showing an example of purchase data during measure implementation.
[Fig. 8] Fig. 8 is a schematic diagram showing an example of prediction data.
[Fig. 9] Fig. 9 is a flowchart showing a prediction data generation operation of the prediction device.
[Fig.10] Fig. 10 is a flowchart showing a setting process for an effect rank for implemented districts.
[Fig. 11] Fig. 11 is a diagram for explaining calculation of a value concerning an effect of measures and setting of effect ranks for measures-implemented districts.
[Fig.12] Fig. 12 is a diagram for explaining setting of rank probabilities for the measures-implemented districts.
[Fig. 13] Fig. 13 is a diagram for explaining construction of a similarity graph for each district characteristic.
[Fig.14] Fig. 14 is a flowchart showing a setting process for an effect for non-implemented districts.
[Fig. 15] Fig. 15 is a diagram for explaining construction of a prediction graph for each effect rank.
[Fig. 16] Fig. 16 is a diagram for explaining combining of similarity graphs based on importance.
[Fig.17] Fig. 17 is a schematic diagram showing propagation of the effect ranks.
[Fig. 18] Fig. 18 is a diagram for explaining prediction of the effect ranks for non-implemented districts.
[Fig.19] Fig. 19 is a diagram showing the functional configuration of the control unit and the data stored in the storage unit at the time of recommendation.
[Fig.20] Fig. 20 is a flowchart showing a recommended operation of the prediction device.
[Fig. 21] Fig. 21 is a diagram for explaining supplement of purchase data in new districts.
[Fig.22] Fig. 22 is a diagram for explaining determination of an effect rank of a trading area.
[Fig.23] Fig. 23 is a diagram for explaining recommendation and non-recommendation according to the effect rank.
[Fig.24] Fig. 24 is a flowchart showing an operation of updating the prediction data of the prediction device.

DETAILED DESCRIPTION

(New Knowledge Underlying the Present Disclosure)

It is desirable to select and recommend effective measures from multiple measure candidates to a target for implementing a measure. The target for implementing a measure is a region or a store, for example. However, in the purchase prediction analysis system as described in Patent Document 1, when an effect of measures is known in a small number of regions, it is difficult to predict the effect of the measures in a region where the effect of the measures is not known. As a result, effective measures cannot be recommended to a region having no measure implemented therein.

The present disclosure provides a prediction device capable of, even when measures are actually implemented in a small number of targets, predicting and recommending an effective measure to another target having no measure implemented therein.

(Embodiment)

An embodiment will now be described with reference to the drawings. In an example described in this embodiment, a target for implementing measures is a store, and the measures are recommended to the store. In this embodiment, a trading area is a range where a store can attract customers and includes one or more districts. The prediction device of this embodiment uses a label propagation method, which is one of the types of machine learning, to propagate an effect rank indicative of a degree of effect of each measure from a district in a trading area of a store having measures already implemented therein to a district in a trading area of a store having no measure implemented therein. As a result, a degree of the effect of each measure is predicted for a store having no measure implemented therein, and a highly effective measure is recommended to the store. For example, based on results of measures in trading areas of a small number of retail chain stores, a measure predicted to be highly effective among multiple measures is recommended to a store in another trading area. The measures implemented in the stores are, for example, use of point-of-purchase advertising, island display, LED sign, in-store display device, coupons printed on receipts, and/or awarding bonus points.

In this description, a district in a trading area of a store having measures already implemented therein is also referred to as a "measures-implemented district". A district in a trading area of a store having no measure implemented therein other than the measures-implemented district is also referred to as a "non-implemented district".

1. Configurations of Prediction Device and Terminal Device

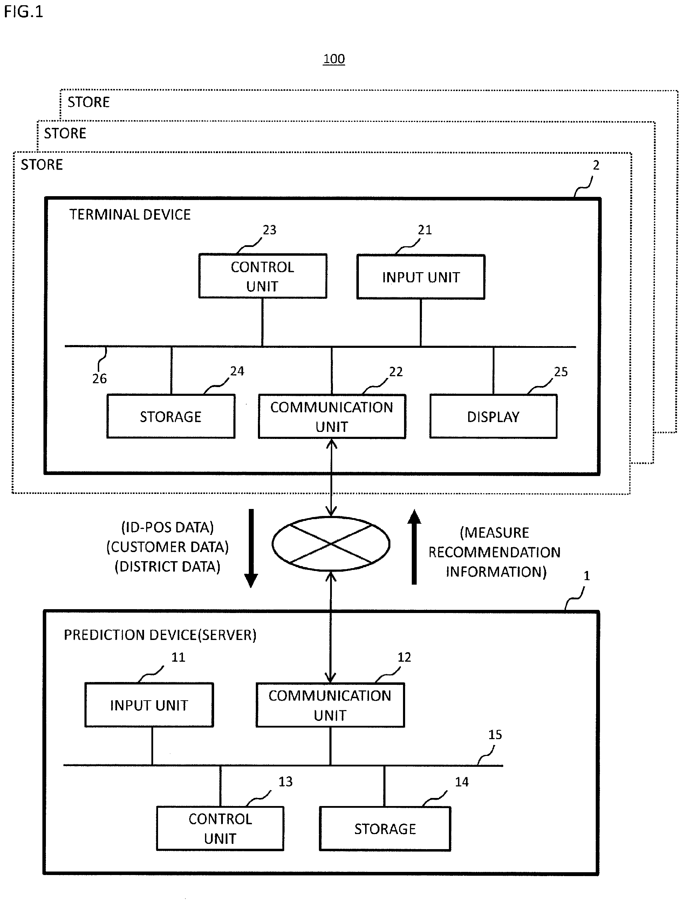

Fig. 1 shows configurations of the prediction device 1 and the terminal device 2. A prediction system 100 includes the prediction device 1 and multiple terminal devices 2. The prediction system 100 predicts and recommends effective measures to stores having no measure implemented therein, by using data of stores having measures already implemented therein.

The prediction device 1 is a server. The terminal devices 2 are various information processing devices such as a POS (Point of Sales) register, a personal computer, a tablet terminal, and a smartphone. For example, the prediction device 1 is a cloud server, and the terminal devices 2 are disposed in stores. In this case, the prediction device 1 and the terminal devices 2 are connected via the Internet.

The prediction device 1 includes an input unit 11, a communication unit 12, a control unit 13, a storage unit 14, and a bus 15.

The input unit 11 is a user interface allowing a user to input various operations. The input unit 11 can be implemented by a touch panel, a keyboard, buttons, switches, or a combination thereof.

The communication unit 12 includes a circuit communicating with an external device in conformity with a predetermined communication standard. The predetermined communication standard is LAN, Wi-Fi (registered trademark), Bluetooth (registered trademark), USB, or HDMI (registered trademark), for example. The communication unit 12 acquires data related to each store from the terminal devices 2 in multiple stores. In this embodiment, ID-POS data, customer data, and district data are acquired as the data related to stores. The district data may be acquired from the terminal device 2 or another external device. The communication unit 12 transmits measure recommendation information indicative of a recommended measure to the terminal device 2.

The control unit 13 can be implemented by a semiconductor element etc. The control unit 13 is a microcomputer, a CPU, an MPU, a GPU, a DSP, an FPGA, or an ASIC, for example. The function of the display control unit 13 may be constituted only by hardware or may be implemented by combining hardware and software. The control unit 13 implements a predetermined function by reading data and a program stored in the storage unit 14 and performing various arithmetic processes.

The storage unit 14 is a storage medium storing programs and data required for implementing the functions of the prediction device 1. The storage unit 14 can be implemented by, for example, a hard disk (HDD), an SSD, a RAM, a DRAM, a ferroelectric memory, a flash memory, a magnetic disk, or a combination thereof.

The bus 15 is a signal line electrically connecting the input unit 11, the communication unit 12, the control unit 13, and the storage unit 14.

The terminal device 2 includes an input unit 21, a communication unit 22, a control unit 23, a storage unit 24, a display 25, and a bus 26.

The terminal device 2 acquires the ID-POS data, the customer data, and the district data through the input unit 21 or the communication unit 22.

The input unit 21 can be implemented by a bar code reader, a card reader, a touch panel, a keyboard, buttons, switches, or a combination thereof.

The communication unit 22 includes a circuit communicating with an external device in conformity with a predetermined communication standard. The predetermined communication standard is LAN, Wi-Fi (registered trademark), Bluetooth (registered trademark), USB, or HDMI (registered trademark), for example. The communication unit 22 transmits the ID-POS data, the customer data, and the district data to the prediction device 1. The communication unit 22 acquires the measure recommendation information from the prediction device 1.

The control unit 23 can be implemented by a semiconductor element etc. The control unit 23 can be made up of a microcomputer, a CPU, an MPU, a GPU, a DSP, an FPGA, or an ASIC, for example. The function of the control unit 23 may be constituted only by hardware or may be implemented by combining hardware and software. The control unit 23 implements a predetermined function by reading data and a program stored in the storage unit 24 and performing various arithmetic processes.

The storage unit 24 is a storage medium storing programs and data required for implementing the functions of the terminal device 2. The storage unit 24 can be implemented by, for example, a hard disk (HDD), an SSD, a RAM, a DRAM, a ferroelectric memory, a flash memory, a magnetic disk, or a combination thereof.

The display 25 is a liquid crystal display or an organic EL display, for example. The display 25 displays a recommendation text for the measure indicated by the measure recommendation information, for example.

The bus 26 is a signal line electrically connecting the input unit 21, the communication unit 22, the control unit 23, the storage unit 24, and the display 25.

2. Operation of Prediction Device at the Time of Learning

2.1 Functional Configuration of Prediction Device at the Time of Learning

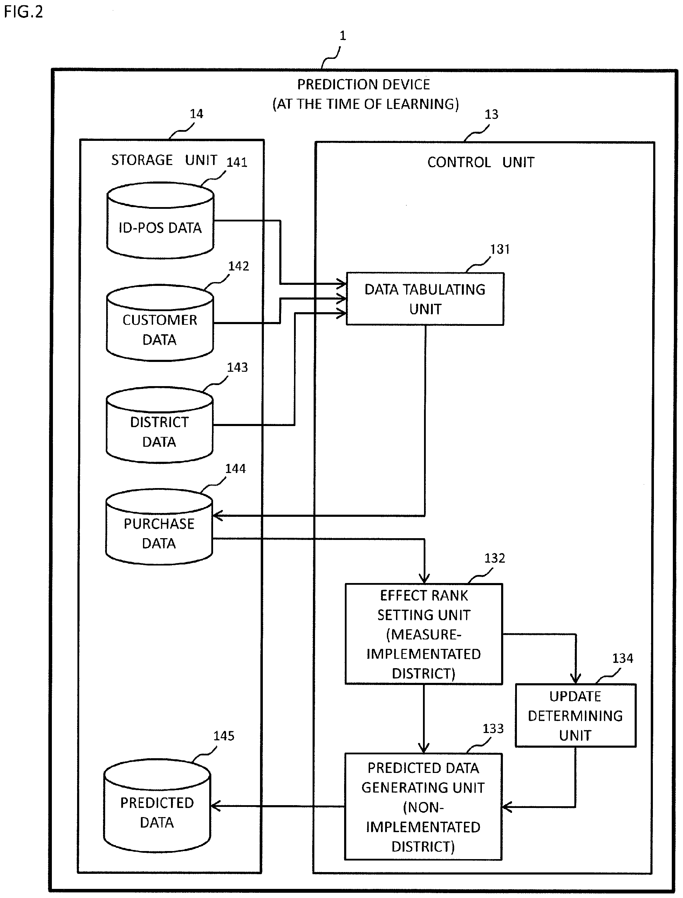

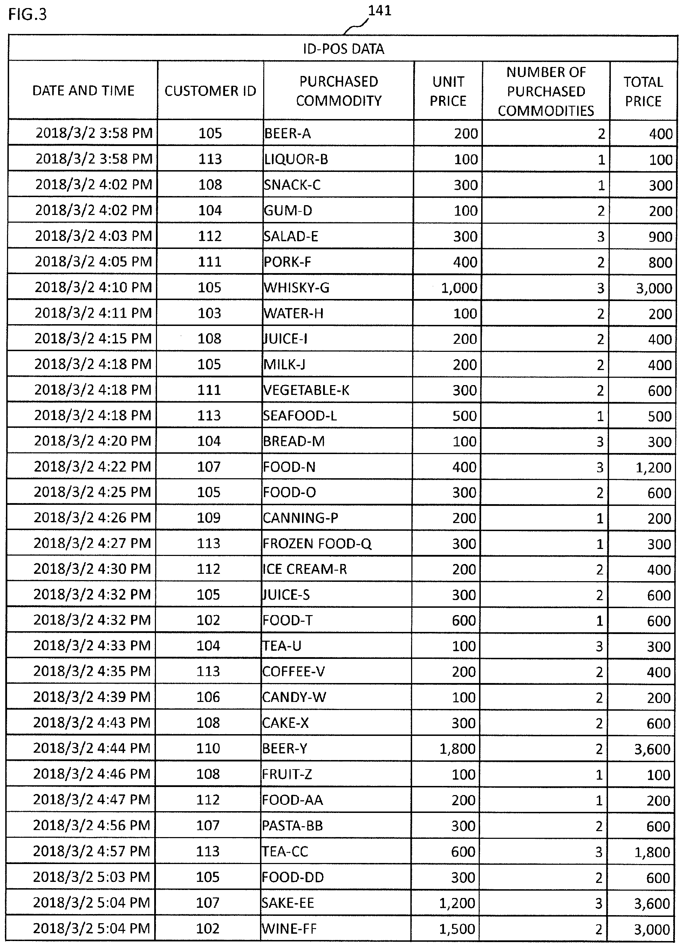

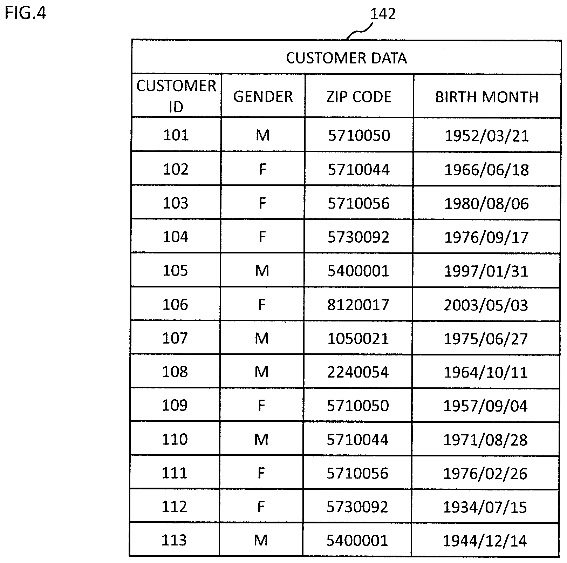

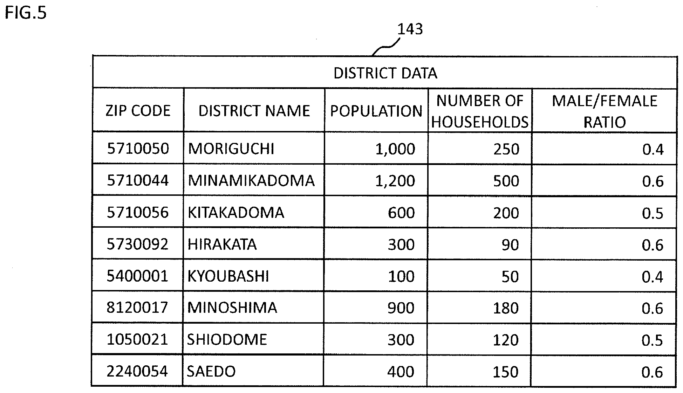

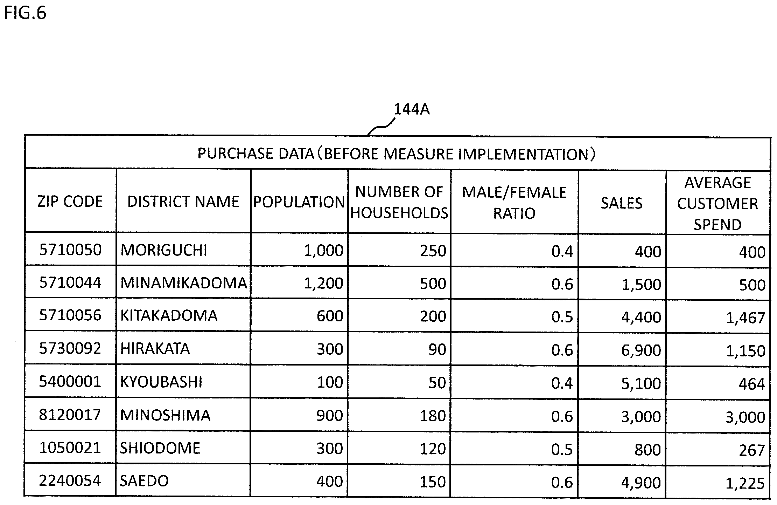

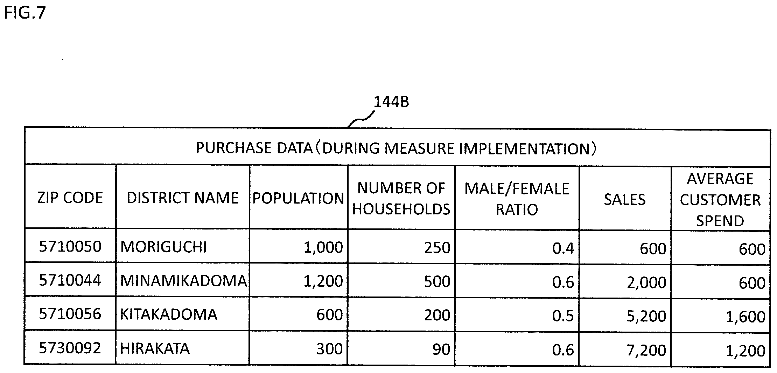

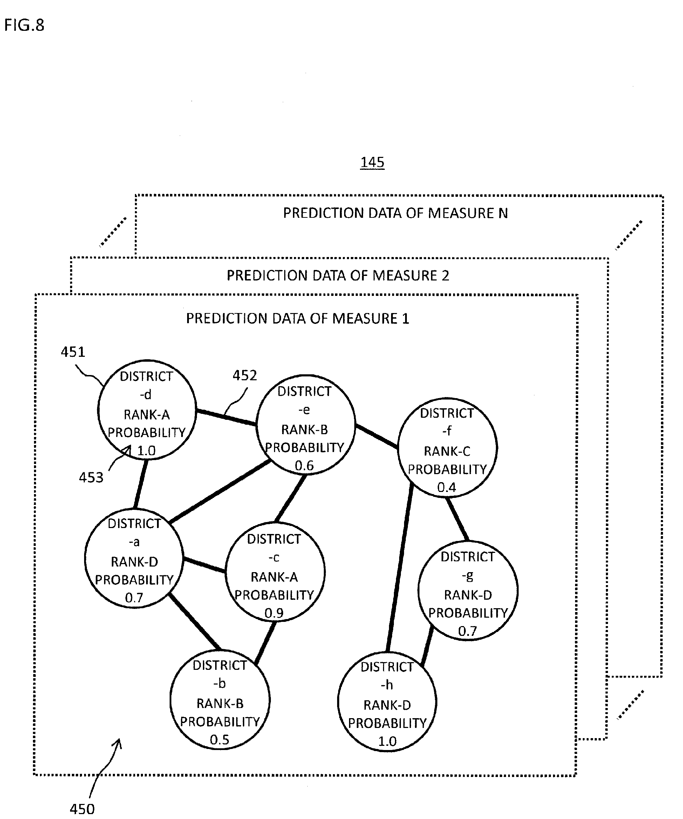

The function of the prediction device 1 at the time of learning will be described with reference to Figs. 2 to 8. Fig. 2 shows a functional configuration of the control unit 13 and data stored in the storage unit 14 at the time of learning of the prediction device 1. Fig. 3 shows an example of ID-POS data 141. Fig. 4 shows an example of customer data 142. Fig. 5 shows an example of district data 143. Fig. 6 shows an example of purchase data 144A before measure implementation. Fig. 7 shows an example of purchase data 144B during measure implementation. Fig. 8 schematically shows an example of prediction data 145. In this embodiment, districts a, b, c, etc. shown in Fig. 8 correspond to districts "Moriguchi", "Minami-Kadoma", "Kita-Kadoma", etc. shown in Figs. 5 to 7.

As shown in Fig. 2, the control unit 13 of the prediction device 1 includes a data tabulating unit 131, an effect rank setting unit 132, a predicted data generating unit 133, and an update determining unit 134.

The storage unit 14 of the prediction device 1 stores the ID-POS data 141, the customer data 142, and the district data 143 acquired via the communication unit 12 from the terminal devices 2 in multiple stores.

The ID-POS data 141 is data indicative of sales of commodities. In the example of Fig. 3, the ID-POS data 141 includes date and time of commodity purchase, an ID of the customer who purchased a commodity, a purchased commodity, a unit price and the number of purchased commodities, and a total price of purchased commodities.

The customer data 142 is data related to customers. In the example of Fig. 4, the customer data 142 includes a customer ID, a gender, a zip code of a customer's place of residence, and a birth month.

The district data 143 is data indicative of characteristics of districts. In the example of Fig. 5, the district data 143 includes a zip code and a district name of a district, population within a district, the number of households, and a male/female ratio of the population.

The data tabulating unit 131 tabulates the ID-POS data 141, the customer data 142, and the district data 143 to generate purchase data 144. The data tabulating unit 131 stores the generated purchase data 144 in the storage unit 14.

As shown in Figs. 6 and 7, the purchase data 144 includes the purchase data 144A before measure implementation and the purchase data 144B during measure implementation. In the examples of Figs. 6 and 7, the purchase data 144A, 144B include a zip code and a district name of a district, a population within a district, the number of households, a male/female ratio of the population, sales within a district, and an average customer spend. The data tabulating unit 131 calculates the sales and the average customer spend of a district in a trading area of a store based on the ID-POS data 141, the customer data 142, and the district data 143, for example. In the generation of the purchase data 144, when each district is associated with trading areas of multiple stores, i.e., when each district is associated with multiple stores, the sales of all the stores may be summed up for each district. In the generation of the purchase data 144, each district may be associated with only one store. The purchase data 144 is an example of measure implementation information showing an effect of the measures. For example, a difference in sales of the purchase data 144A, 144B represents the effect of the measures.

The effect rank setting unit 132 determines an effect rank of measures for an implemented district, which is a district in a trading area of a store having the measures already implemented therein. Specifically, the effect rank setting unit 132 calculates a value concerning the effect of the measures based on the purchase data 144A before measure implementation and the purchase data 144B during measure implementation. The effect rank setting unit 132 compares the value concerning the effect of measures with a predetermined threshold value to classify the degree of the effect of the measures into multiple effect ranks. The multiple effect ranks are ranks A, B, C, and D, for example.

The prediction data generating unit 133 predicts the effect rank of the measure for a non-implemented region, which is a district in a trading area of a store having no measure implemented therein. Specifically, the prediction data generating unit 133 constructs a prediction graph for each measure and propagates the effect rank by the label propagation method from a node of the measures-implemented district to a node of the non-implemented district. As a result, the prediction data generating unit 133 generates and stores prediction data 145 indicative of the effect rank of each measure for each district into the storage unit 14.

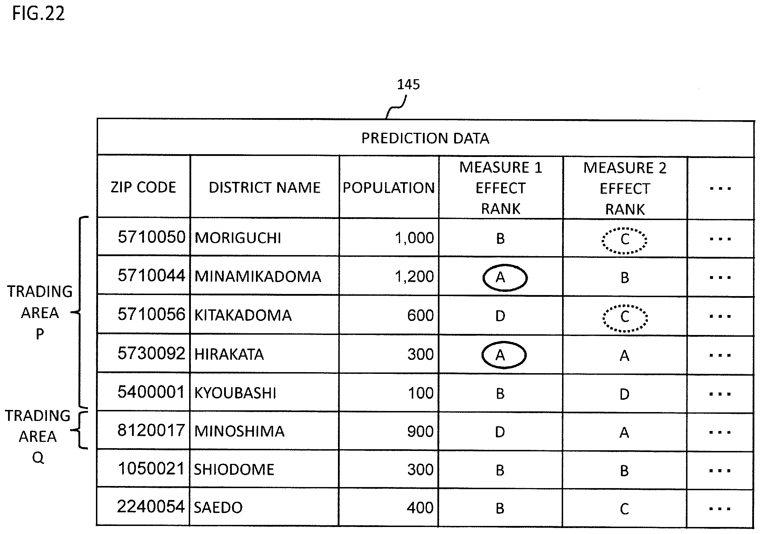

The prediction data 145 includes information indicative of a prediction graph 450 as shown in Fig. 8, for example. The information indicative of the prediction graph 450 includes an importance that is a weight at the time of combining of multiple similarity graphs, for example. Details of the importance will be described later. The prediction graph 450 is made up of nodes 451, links 452 connecting the nodes 451, and labels 453 assigned to the nodes 451. In this embodiment, the node 451 corresponds to a district. The link 452 corresponds to the similarity between districts. Therefore, the link 452 has strength corresponding to the similarity between districts, and, for example, the prediction data 145 includes information indicative of the strengths of all the links 452 in the prediction graph 450. The label 453 corresponds to the effect rank of the measure. The prediction data 145 includes data in which the effect rank of each measure is added to the district data 143 as shown in Fig. 22, for example.

The update determining unit 134 determines whether to update the prediction data 145. For example, the update determining unit 134 determines whether to update the prediction data 145 based on a change in the effect rank of the measures-implemented district set by the effect rank setting unit 132. The update determining unit 134 may determine whether to update the prediction data 145 based on at least one of the ID-POS data 141, the customer data 142, the district data 143, and the purchase data 144. When determining to update the prediction data 145, the update determining unit 134 instructs the prediction data generating unit 133 to update the prediction data 145. As a result, the prediction data generating unit 133 reconstructs the prediction graph 450 to update the prediction data 145.

2.2 Overall Operation at the Time of Learning

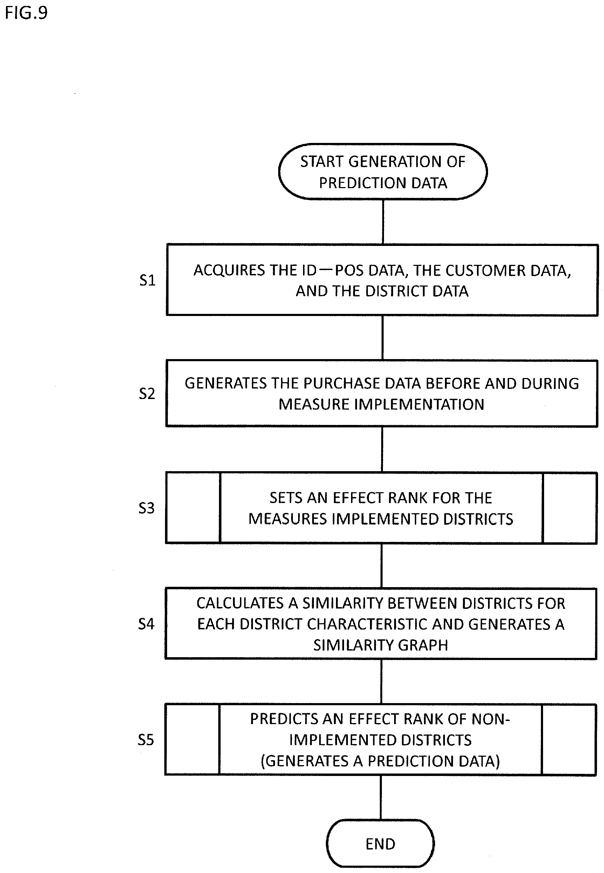

Fig. 9 shows a prediction data generation operation by the control unit 13 of the prediction device 1.

The data tabulating unit 131 acquires the ID-POS data 141, the customer data 142, and the district data 143 (S1). For example, the data tabulating unit 131 acquires the ID-POS data 141 corresponding to a predetermined period before measure implementation and the customer data 142 and the district data 143 corresponding to the predetermined period from the terminal devices 2 of the multiple stores. The data tabulating unit 131 also acquires the ID-POS data 141 corresponding to a predetermined period during measure implementation and the customer data 142 and the district data 143 corresponding to the predetermined period from the terminal devices 2 of the stores having measures already implemented therein. The predetermined period is one month, for example. The data tabulating unit 131 may read, from the storage unit 14 at step S1, the ID-POS data 141, the customer data 142, and the district data 143 preliminarily acquired from the terminal devices 2 and stored in the storage unit 14.

Based on the ID-POS data 141, the customer data 142, and the district data 143, the data tabulating unit 131 generates the purchase data 144A before measure implementation and the purchase data 144B during measure implementation (S2).

The effect rank setting unit 132 sets an effect rank of a measure for a district in the trading area of the store having measures already implemented therein (S3).

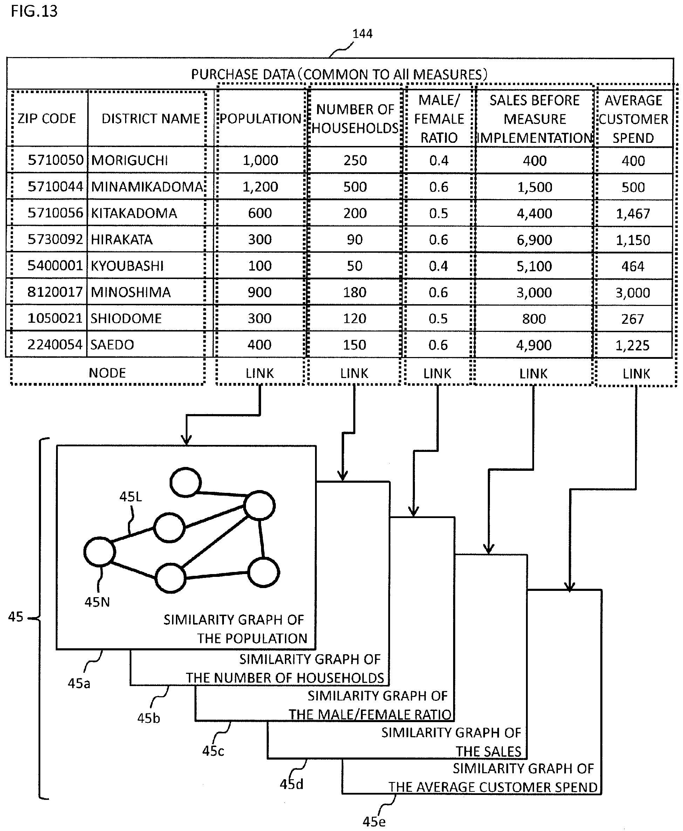

The prediction data generating unit 133 calculates a similarity between districts for each district characteristic and generates a similarity graph (S4). The district characteristics are the population, the number of households, the male/female ratio of the population, the sales, and the average customer spend, for example. For example, a similarity graph of population, a similarity graph of the number of households, a similarity graph of the male/female ratio, a similarity graph of the sales, and a similarity graph of the average customer spend are generated (see Fig. 13).

The prediction data generating unit 133 generates a prediction graph by combining the similarity graphs for each district characteristic and predicts an effect rank of a district in the trading area of the store having no measure implemented therein (S5) . As a result, the prediction data 145 is generated.

The prediction device 1 performs the process of steps S1 to S5 for each measure.

2.3 Setting of Effect Rank for Measures-implemented District

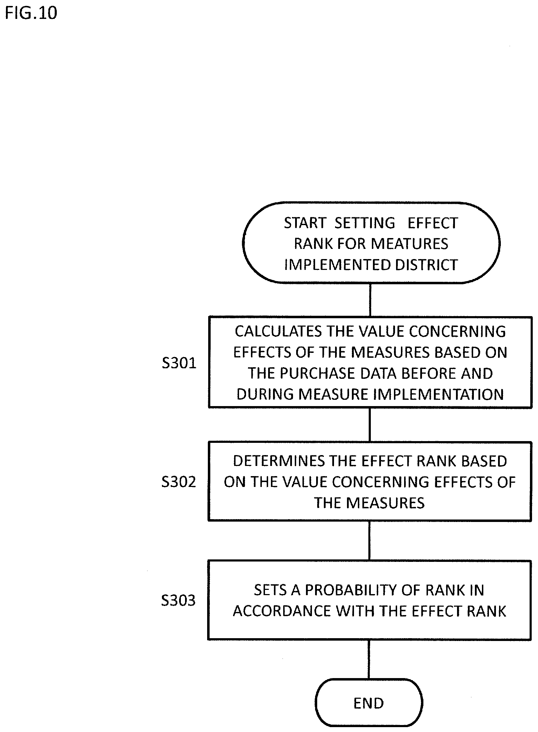

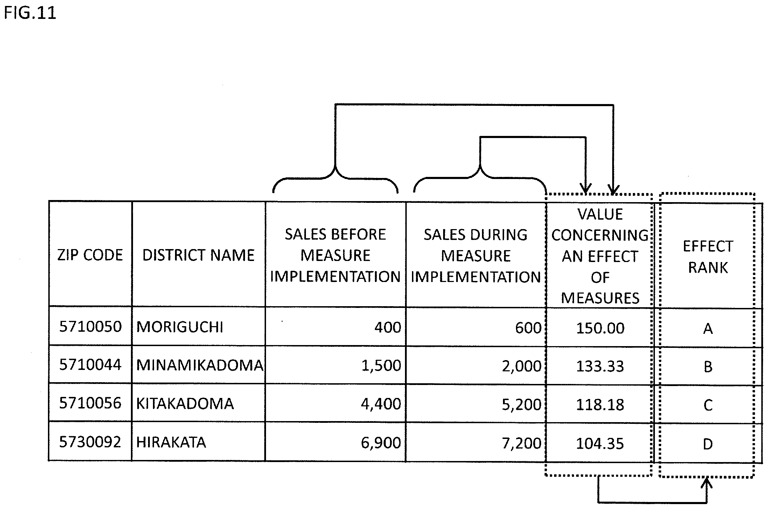

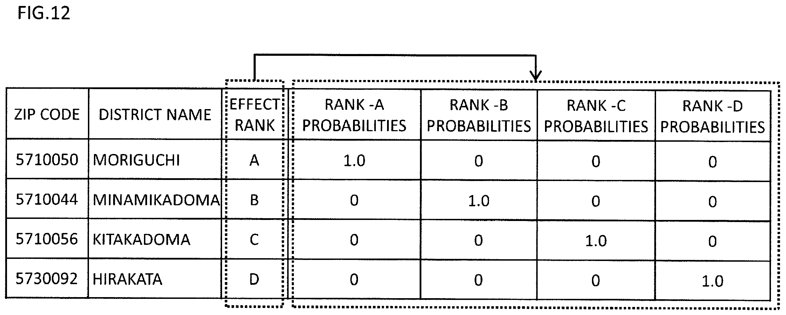

The setting of the effect rank of the measures-implemented district, i.e., the district in the trading area of the store having measures already implemented therein, will be described with reference to Figs. 10 to 12. Fig. 10 shows an effect rank setting operation for the measures-implemented district (details of step S3 of Fig. 9) . Fig. 11 shows an example of values concerning effects of the measures and the effect rank. Fig. 12 shows an example of rank probabilities.

The effect rank setting unit 132 calculates the value concerning effects of the measures based on the purchase data 144A before measure implementation and the purchase data 144B during measure implementation (S301). For example, the value concerning the effect of the measures is calculated by "value concerning the effect of the measures = sales during measure implementation / sales before measure implementation $\times$ 100".

The effect rank setting unit 132 determines the effect rank based on the value concerning the effect of the measures (S302) . For example, the effect rank setting unit 132 compares the value concerning the effect of the measures with three threshold values and determines one of ranks A, B, C, D.

The effect rank setting unit 132 sets a probability of each effect rank in accordance with the determined effect rank (S303). Specifically, the probability of the determined effect rank is set to 1.0, and the probabilities of the other effect ranks are set to 0. For example, as shown in Fig. 12, for Moriguchi ranked at the effect rank A, the probability of rank A is set to 1.0, and the probabilities of ranks B, C, and D are set to 0.

2.4 Construction of Similarity Graph

Fig. 13 is a diagram for explaining the generation of a similarity graph 45 for each district characteristic at step S4. The district characteristics are the population, the number of households, the male/female ratio of the population, the sales before measure implementation, and the average customer spend, for example. At step S4, the prediction data generating unit 133 generates, for example, a similarity graph 45a of the population, a similarity graph 45b of the number of households, a similarity graph 45c of the male/female ratio, a similarity graph 45d of the sales, and a similarity graph 45e of the average customer spend based on the purchase data 144. The similarity graph 45a of the population, the similarity graph 45b of the number of households, the similarity graph 45c of the male/female ratio, the similarity graph 45d of the sales, and the similarity graph 45e of the average customer spend are collectively referred to as the similarity graphs 45 if not particularly distinguished. Each of nodes 45N in the similarity graphs 45 is a district. Links 45L in the similarity graph 45a of the population, the similarity graph 45b of the number of households, the similarity graph 45c of the male/female ratio, the similarity graph 45d of the sales, and the similarity graph 45e of the average customer spend have link strengths that are similarities of the population, the number of households, the male/female ratio, the sales, and the average customer spend, respectively.

Specifically, at step S4, the prediction data generating unit 133 calculates a link strength $A_{kij}$ in each of the similarity graphs 45 by Eq. (1).

[Math. 1]

$$A_{kij} = \exp\left(\frac{|v_{ki} - v_{kj}|}{\sigma}\right) \cdots (1)$$

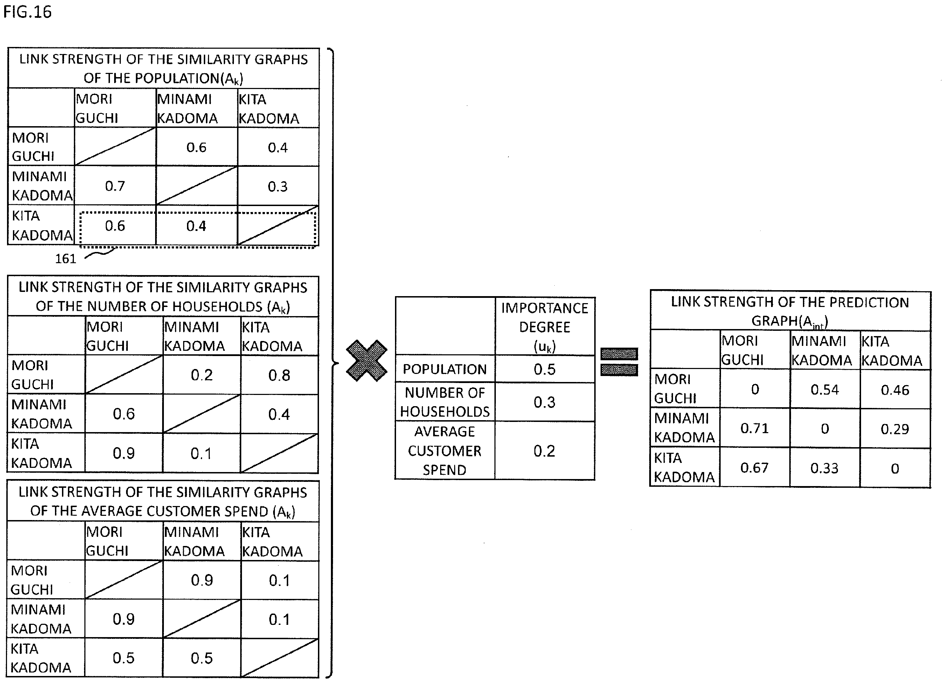

In Eq. (1), k is a district characteristic such as population, sales, and average customer spend; i and j are the nodes 45N indicative of the districts; $A_{kij}$ is a strength of the link 45L between a node i and a node j of the similarity graph 45 related to the district characteristic k; $v_{ki}$ is a value of the characteristic k of the node i; $v_{kj}$ is a value of the characteristic k of the node j; and $\sigma$ is a positive definite parameter. The link strength $A_{kij}$ is specifically a component (i, j) of a matrix $A_k$. In calculation of the link strength $A_{kij}$, normalization is performed to set $A_k 1_n = 1_n$. In this case, n is the total number of districts, $A_k$ is the link strength of the similarity graph 45 for the district characteristic k, and the link strength $A_k$ is specifically a matrix. Therefore, the process of normalizing $v_{ki}$ with respect to k is performed before calculation of $A_{kij}$. As a result, the normalization is performed such that a total becomes 1 in each row 161 indicative of the link strength in the similarity graph of Fig. 16.

2.5 Prediction of Probability of Effect Rank of Non-Implemented District

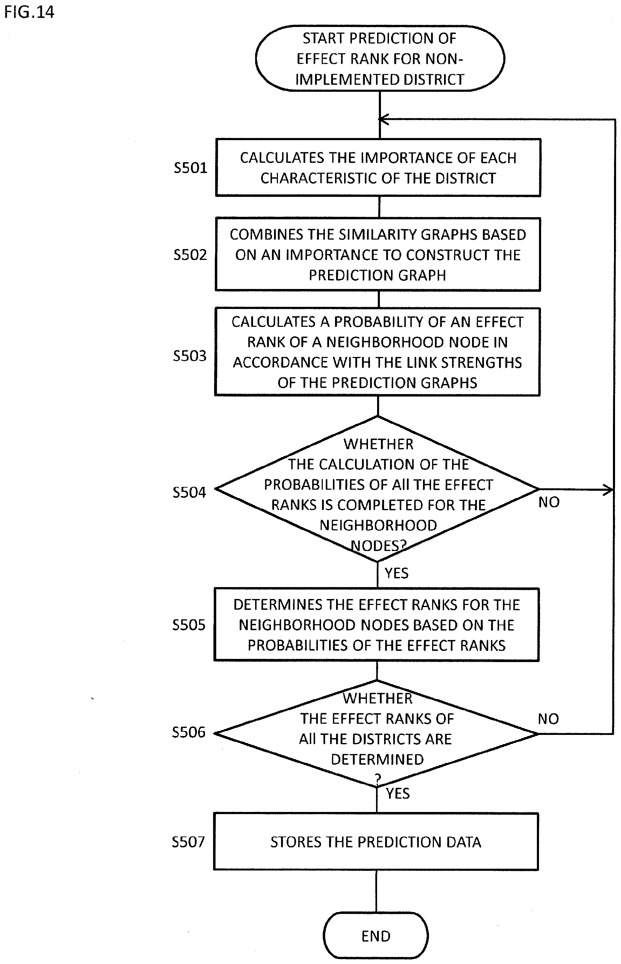

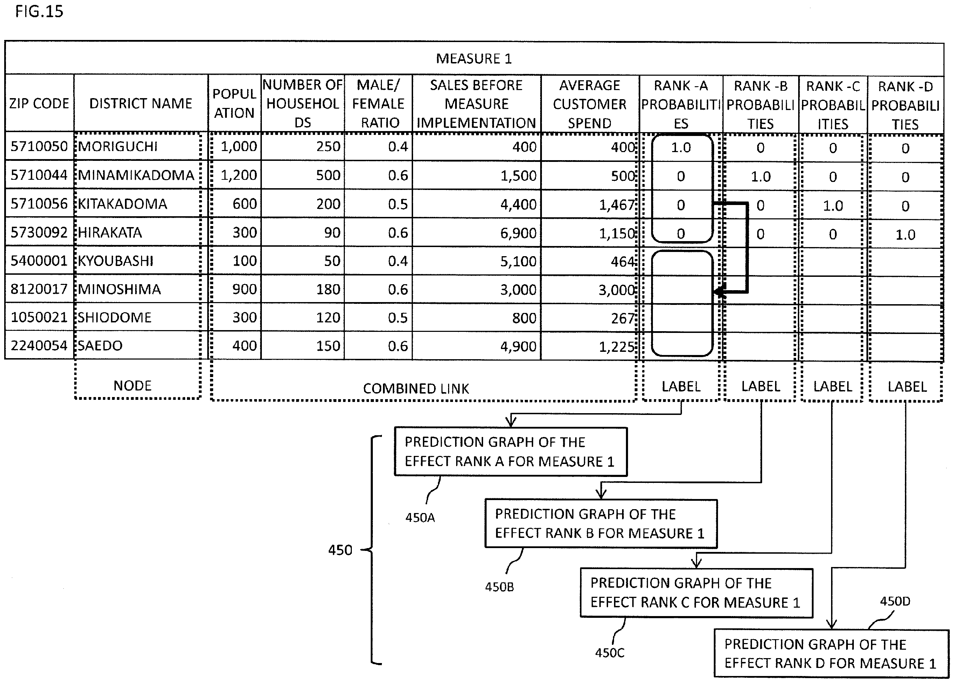

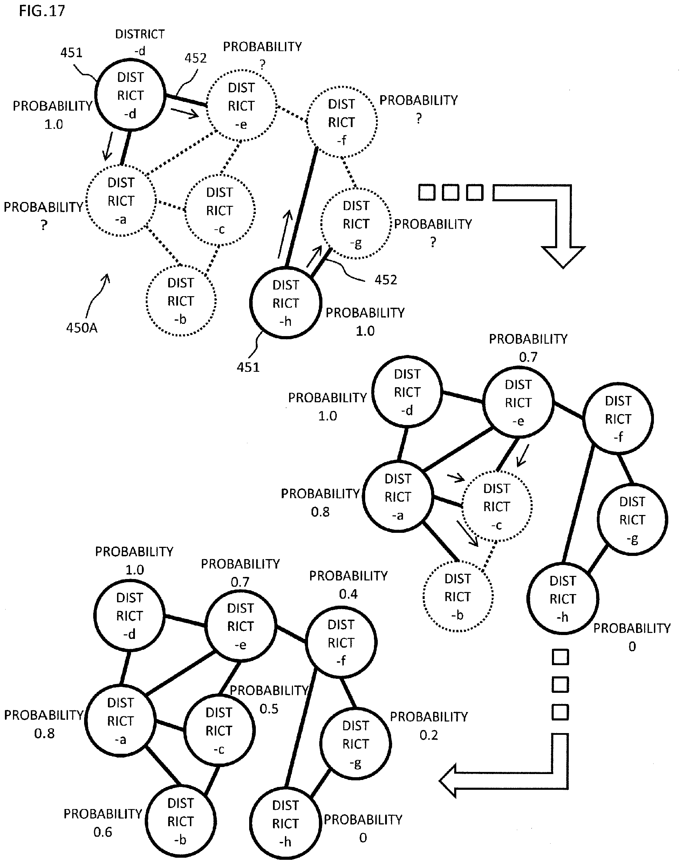

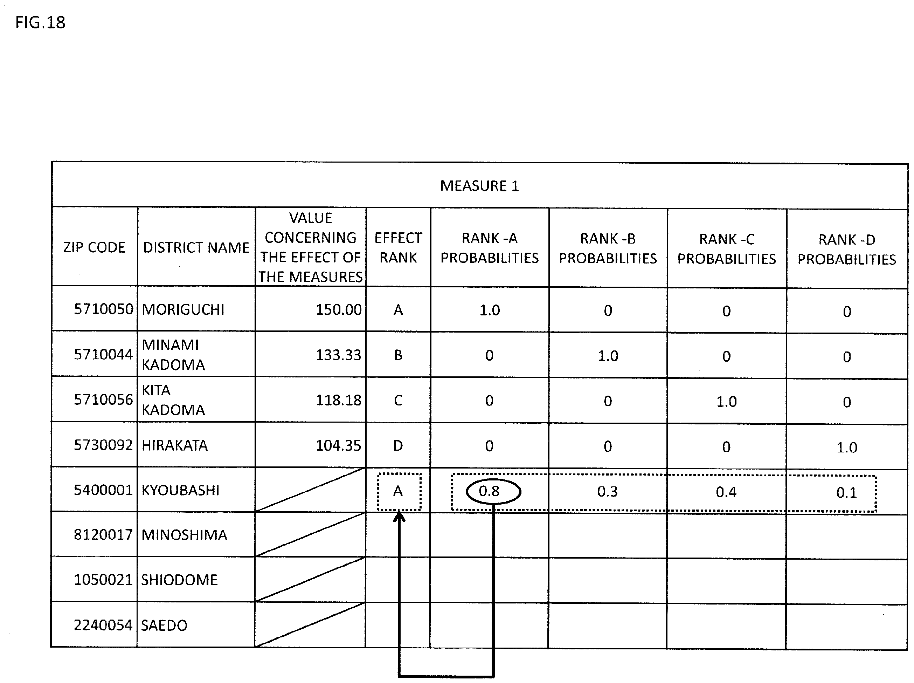

The prediction of the effect rank of the non-implemented district, i.e., the district in the trading area of the store having no measure implemented therein, will be described with reference to Figs. 14 to 18. Fig. 14 shows an effect rank predicting operation for the non-implemented district (details of step S5 of Fig. 9). Fig. 15 is a diagram for explaining generation of a prediction graph for each effect rank. Fig. 16 is a diagram for explaining combining of the similarity graphs 45. Fig. 17 schematically shows the propagation of the effect rank. In Fig. 17, a district indicated by a solid line indicates a district for which the effect rank is determined, and a district indicated by a broken line indicates a district for which the effect rank is not determined. Fig. 18 is a diagram for explaining the prediction of the effect rank for the non-implemented district.

The prediction data generating unit 133 performs steps S501 to S503 of Fig. 14 for each effect rank. Therefore, as shown in Fig. 15, for example, respective prediction graphs 450A, 450B, 450C, 450D labeled with the ranks A, B, C, D are constructed for a measure 1. A node in the prediction graphs 450A, 450B, 450C, 450D is a district, and a link has a strength acquired by combining the similarities of the characteristics of the districts. In the prediction graphs 450A, 450B, 450C, 450D, the effect ranks are propagated from the measure-implemented district to the non-implemented district. The prediction graphs 450A, 450B, 450C, 450D are collectively referred to as the prediction graph 450 if not particularly distinguished.

Specifically, the prediction data generating unit 133 calculates the importance of each characteristic of the district (S501). The prediction data generating unit 133 uses an EM (Expectation Maximization) algorithm, for example, and calculates the importance by Eq. (2) . The EM algorithm is made up of E and M steps. The E step calculates a likely importance, and the M step updates the probability of the effect rank so as to maximize the expected value of the importance calculated at the E step.

(E step)

[Math. 2]

$$\overline{u}_k = \frac{\nu + n}{\nu + \beta_{net} f^T L_k f} \quad \cdots (2)$$

In Eq. (2),
$\overline{u}_k$ is the importance of the characteristic k after updating, f is a predicted value of the probability of the effect rank, $L_k$ is a graph Laplacian of a graph $A_k$, $\nu$ and $\beta_{net}$ are positive definite parameters, and n is the total number of districts.

The graph Laplacian $L_k$ can be obtained by Eq. (3) .

[Math. 3]

$$L_k \equiv \mathrm{diag}(A_k 1_n) - A_k \quad \cdots (3)$$

The prediction data generating unit 133 combines the similarity graphs 45 based on an importance $u_k$ to construct the prediction graph 450 (S502). Specifically, the prediction data generating unit 133 calculates a link strength Aint of the prediction graphs 450A to 450D by Eq. (4). The link strength $A_{int}$ is specifically a matrix.

[Math. 4]

$$A_{\mathrm{int}}(u) = \sum_{k=1}^{K} u_k A_k \quad \cdots (4)$$

Fig. 16 shows an example of calculation of the link strength Aint of the prediction graph 450 from the link strength $A_k$ of the similarity graphs 45 of the population, the number of households, and the average customer spend, for simplicity of description. As shown in Eq. (4) and Fig. 16, the link strength $A_k$ of the similarity graphs 45 is multiplied by the importance degree $u_k$ obtained for each characteristic of the district to calculate the sum, and the link strengths Aint of the prediction graphs 450A to 450D are thereby respectively calculated.

The prediction data generating unit 133 calculates a probability of an effect rank of a neighborhood node of the node with the determined effect rank in accordance with the link strengths Aint of the prediction graphs 450A to 450D (S503). Therefore, the prediction data generating unit 133 propagates the effect rank to the neighborhood nodes of the node with the determined effect rank. For example, in the prediction graph 450A of the effect rank A shown in Fig. 17, the prediction data generating unit 133 calculates the probability of the effect rank A in the neighborhood nodes of the node 451 with the determined effect rank, based on the strength of the link 452. For example, the probability of the effect rank A is calculated for the neighborhood districts a, e of the district d and the neighborhood districts f, g of the district h.

Specifically, the prediction data generating unit 133 calculates the probability of the effect rank by Eq. (5).

(M step)

[Math. 5]

$$\hat{f} = \mathrm{argmin}_f \left( \beta_y (f - y)^T G (f - y) \right) + f^T \left( \beta_{\mathrm{bias}} I_n + \beta_{net} L_{\mathrm{int}}(\overline{u}) f \right)$$
$$= \left( G + \frac{\beta_{\mathrm{bias}}}{\beta_y} I_n + \frac{\beta_{net}}{\beta_y} L_{\mathrm{int}}(\overline{u}) \right)^{-1} G y \quad \cdots (5)$$

In equation (5), $\hat{f}$ is a predicted value of the probability of the effect rank after update, f is a predicted value of the probability of the effect rank before update, y is the probability of the effect rank of the implementation area, G is a diagonal matrix for calculation, $I_n$ is an n-dimensional identity matrix, Lint is a graph Laplacian, and $\beta_y$, $\beta_{\mathrm{bias}}$, and $\beta_{net}$ are positive definite parameters. The graph Laplacian Lint is calculated by Eq. (6).

[Eq. 6]

$$L_{\text{int}} \equiv \text{diag}(A_{\text{int}} \mathbf{1}_n) - A_{\text{int}} \quad \cdots (6)$$

The diagonal matrix G for calculation is as follows. In this equation, 1 is the number of the measures-implemented districts, and n is the total number of districts.

[Math. 7]

$$G_{ii} = \begin{cases} 1 & \text{if } 1 \leq i \leq l \\ 0 & \text{if } l+1 \leq i \leq n \end{cases} \quad \cdots (7)$$

In the EM algorithm, Eqs. (2) and (5) are used for repeatedly calculating the importance and the predicted value of the probability of the effect rank, and when an amount of change compared with the value before update falls below a threshold value, the predicted value of the probability of the effect rank is determined.

2.6 Determination of Effect Rank of Non-Implemented District

The prediction data generating unit 133 determines whether the calculation of the probabilities of all the effect ranks is completed for the neighborhood nodes of the node with the determined effect rank (S504). For example, if the probabilities of all the effect ranks A, B, C, D are not calculated, the process returns to step S501, and steps S501 to S503 are performed for the effect ranks of which the probabilities are not calculated. When all the probabilities of the effect ranks A, B, C D are calculated, the process goes to step S505.

The prediction data generating unit 133 determines the effect ranks for the neighborhood nodes for which the probabilities of the effect ranks are calculated, based on the probabilities of the effect ranks (S505) . For example, as shown in Fig. 18, if the probabilities of the effect ranks A, B, C, and D are calculated as "0.8", "0.3", "0.4", and "0.1" for the Kyobashi area, the effect rank A having the highest probability of "0.8" is determined as the effect rank of the Kyobashi area.

The prediction data generating unit 133 determines whether the effect ranks of all the districts in the prediction graphs 450 are determined (S506). If the effect ranks of all the districts are determined (No at S506), the process returns to step S501. As a result, as shown in Fig. 17, the effect rank is propagated from the district where the effect rank is determined to the district where the effect rank is not determined.

When the effect ranks of all the districts are determined (Yes at S506), the prediction data generating unit 133 stores the prediction data 145 in the storage unit 14 (S507) . As described above, for example, the prediction data 145 includes information indicative of the prediction graph 450 as illustrated in Fig. 8, i.e., the prediction graphs 450A, 450B, 450C, 450D. Specifically, for example, the prediction data 145 includes the districts that are the nodes 451, the strengths Aint of the links 452, the importance $u_k$, and the effect ranks of the districts that are the labels 453, and the probabilities of the effect ranks.

As described above, the prediction device 1 performs steps S1 to S5 shown in Fig. 9 for each measure. The prediction device 1 performs steps S501 to S503 shown in Fig. 14 for each effect rank. Therefore, the prediction device 1 generates the prediction graphs 450 to the number corresponding to "the number of measures $\times$ the number of ranks" from the multiple similarity graphs 45 and calculates the probability of the effect rank for each effect rank in each measure. The prediction device 1 determines the effect rank having the highest probability for each district as the effect rank of the district.

3. Operation of Prediction Device at the Time of Recommendation

3.1 Functional Configuration of Prediction Device at the Time of Recommendation

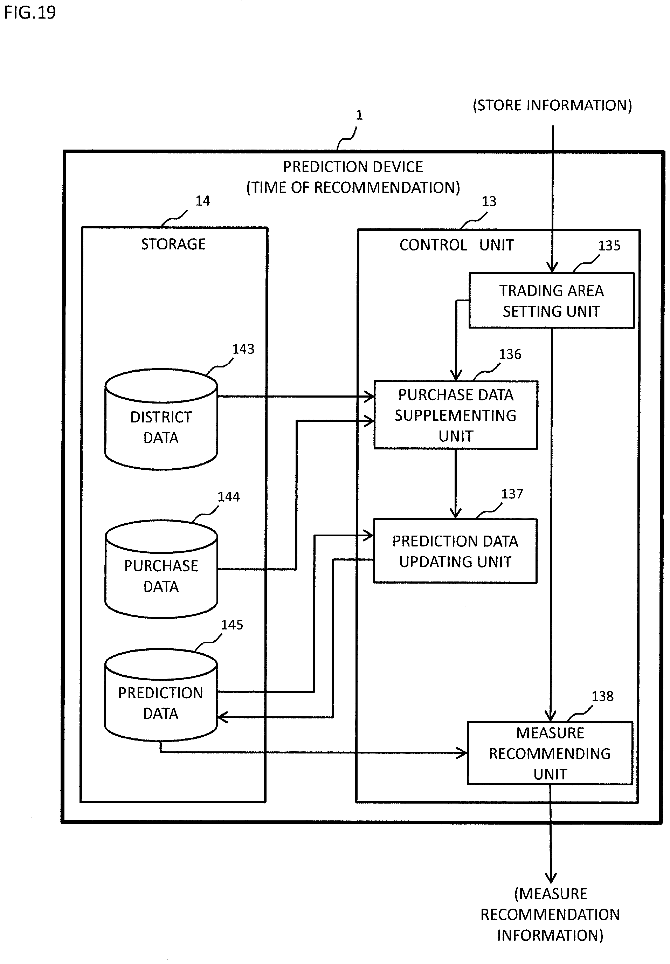

Fig. 19 shows the functional configuration of the control unit 13 and the data stored in the storage unit 14 at the time of recommendation by the prediction device 1.

The control unit 13 of the prediction device 1 includes a trading area setting unit 135, a purchase data supplementing unit 136, a prediction data updating unit 137, and a measure recommending unit 138.

The trading area setting unit 135 acquires store information indicative of a store that is a target for which an effect of the measures is to be predicted, from the input unit 11 or the communication unit 12 and sets a trading area.

The purchase data supplementing unit 136 supplements the purchase data 144 by calculating the sales and the average customer spend of a new store based on the sales and the average customer spend of existing stores. The prediction data updating unit 137 uses the supplemented purchase data 144 to reconstruct the prediction graph 450 and update the prediction data 145.

The measure recommending unit 138 determines a measure recommended to a store based on the prediction data 145. The measure recommending unit 138 transmits measure recommendation information indicative of the determined measure via the communication unit 12 to the terminal device 2.

3.2 Operation at the Time of Recommendation

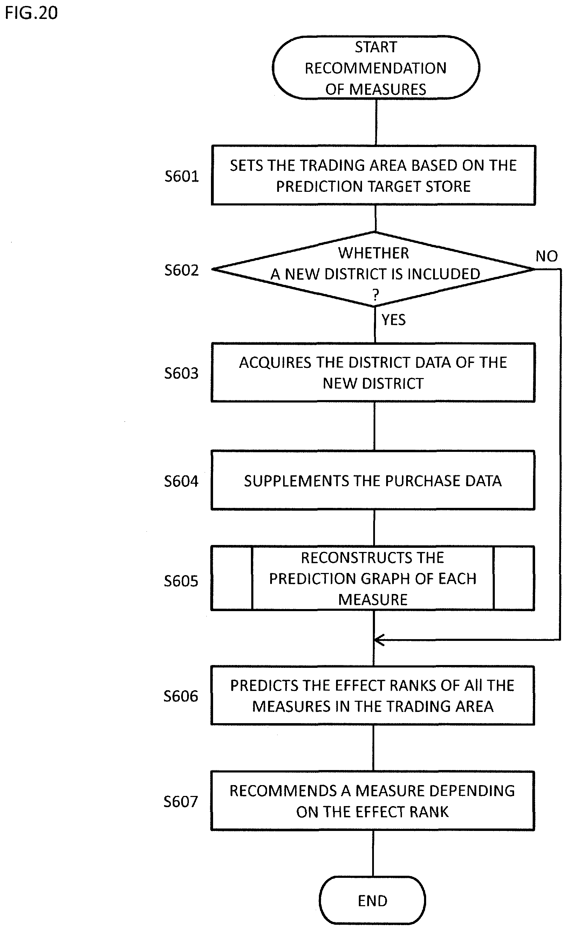

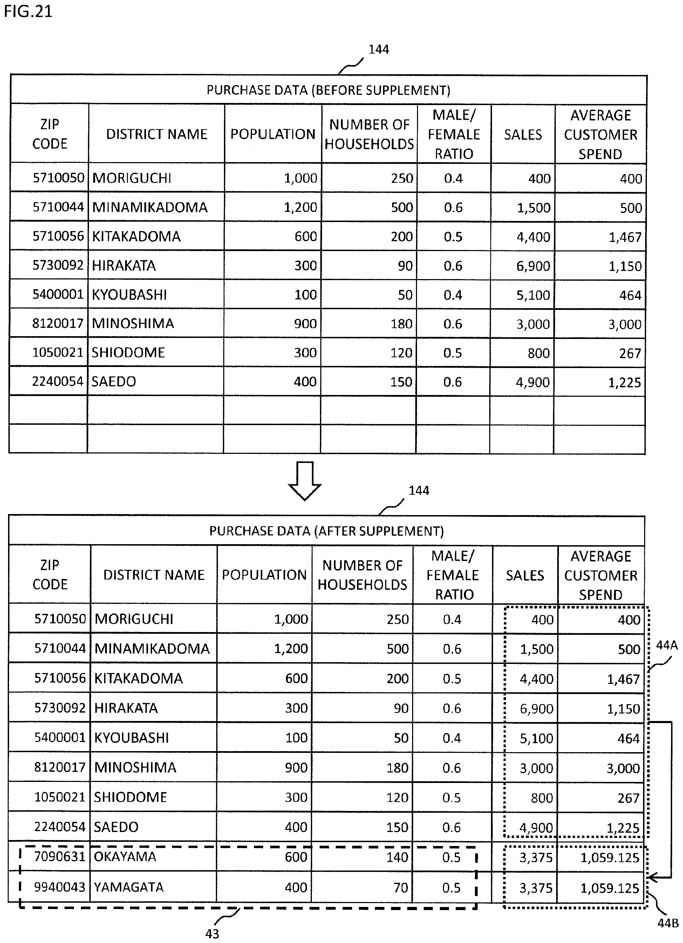

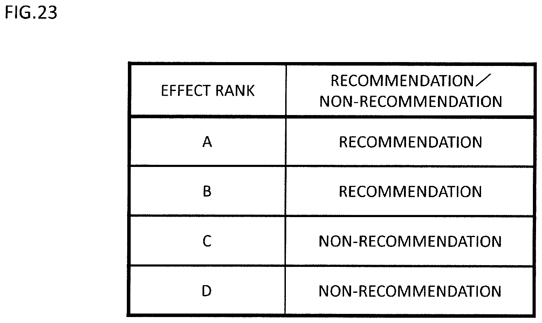

Recommendation of measures will be described with reference to Figs. 20 to 23. Fig. 20 shows an operation at the time of recommendation by the control unit 13 of the prediction device 1. Fig. 21 shows an example of supplement of the purchase data 144. Fig. 22 is a diagram for explaining the determination of the effect rank of trading areas. Fig. 23 shows an example of recommendation and non-recommendation of measures according to the effect rank.

In Fig. 20, the trading area setting unit 135 acquires the store information indicative of a store for which an effect of measures is to be predicted from the input unit 11 or the communication unit 12 and then sets the trading area of the store based on the store information (S601) . The trading area setting unit 135 identifies residential districts of visitors based on the ID-POS data 141 and the customer data 142 acquired from the prediction target store, for example, and sets the trading area. The trading area setting unit 135 may set the trading area as an area within a predetermined distance from the prediction target store.

The trading area setting unit 135 determines whether a new district is included in the districts within the set trading area (S602) . The new district is a district not included in the prediction data 145. For example, if the prediction target store is a new store to be opened, the effect rank of the district in the trading area of the new store is not included in the prediction data 145 generated at the time of learning. In this case, the new district is included in the districts in the trading area set at step S601. In this way, if the new district is included (Yes at S602), the process goes to step S603. If the effect rank of the district in the set trading area is included in the prediction data 145, i.e., if the new district is not included (No at S602), the process goes to step S606.

The purchase data supplementing unit 136 acquires the district data 143 of the new district (S603) . For example, the purchase data supplementing unit 136 acquires the district data 143 of the new district from the terminal device 2 or another external device and stores the district data in the storage unit 14. Alternatively, the purchase data supplementing unit 136 reads from the storage unit 14 the district data 143 of the new district preliminarily acquired and stored in the storage unit 14. The purchase data supplementing unit 136 supplements the purchase data 144 based on the district data 143 of the new district and the purchase data 144 of the existing districts (S604). For example, as shown in Fig. 21, the purchase data supplementing unit 136 adds data 43 included in the district data 143 of new districts to the purchase data 144 and calculates sales and average customer spend 44B of the new districts based on sales and average customer spend 44A of the existing districts. For example, the purchase data supplementing unit 136 sets the average values of the sales and average customer spend of the existing districts as the sales and average customer spend of the new districts. The purchase data supplementing unit 136 may calculate the sales and average customer spend of the new districts by regression analysis from the sales and average customer spend of the existing districts.

The prediction data updating unit 137 uses the supplemented purchase data 144 to reconstruct the prediction graph 450 of each measure (S605) . The prediction data updating unit 137 updates the prediction data 145 in the storage unit 14 based on the reconstructed prediction graph 450. Step S605 of reconstructing the prediction graph 450 corresponds to steps S4, S5 of Fig. 9.

The measure recommending unit 138 predicts the effect ranks of all the measures in the trading area based on the prediction data 145 (S606). For example, when the trading area set at step S601 includes multiple districts, the population of the districts is tabulated for each effect rank for each measure, and the effect rank with the largest population is set as the effect rank of the trading area. Specifically, for example, when a trading area P including "Moriguchi", "Minami-Kadoma", "Kita-Kadoma", "Hirakata", and "Kyobashi" shown in Fig. 22 is set at step S601, and the effect rank of the measure 1 of the trading area P is determined, a total population is first calculated for each effect rank of the measure 1. Regarding the measure 1, the population of the effect rank A is 1500 (=1200+300), the population of the effect rank B is 1100 (=1000+100), the population of the effect rank C is 0, and the population of the effect rank D is 600. Therefore, for the measure 1, the effect rank A having the largest population is set as the effect rank of the trading area P. When the effect rank of a measure 2 of the trading area P is determined, a total population is calculated for each effect rank of the measure 2. Regarding the measure 2, the population of the effect rank A is 300, the population of the effect rank B is 1200, the population of the effect rank C is 1600 (=1000+600), and the population of the effect rank D is 100. In this case, for the measure 2, the effect rank C having the largest population is set as the effect rank of the trading area P. When the trading area set at step S601 includes only one district, for example, when a trading area Q is set in the example of Fig. 22, the effect rank of the Minoshima district included in the trading area Q is set as the effect rank of the trading area Q.

The measure recommending unit 138 determines a measure to be recommended depending on the predicted effect rank (S607). For example, as shown in Fig. 23, the measures of the effect ranks A, B are determined as the recommended measures. The measure recommending unit 138 transmits the measure recommendation information indicative of the determined measure via the communication unit 12 to the terminal device 2 of the prediction target store designated at step S601. For example, the measure recommendation information includes a recommendation text for the measure. The terminal device 2 displays the recommendation text on the display 25 based on the measure recommendation information.

As described above, the prediction device 1 propagates the effect ranks of the measures by the label propagation method from the district in the trading area of the store having measures already implemented therein to the district in the trading area of the store having no measure implemented therein. The prediction device 1 predicts the effect ranks of all the measures in the trading area of the prediction target store based on the propagated effect ranks of the measures. The prediction device 1 determines a recommended measure based on the predicted effect ranks. As a result, even when measures are implemented in a small number of stores, an effective measure at the prediction target store can be recommended.

4. Update of Prediction Data

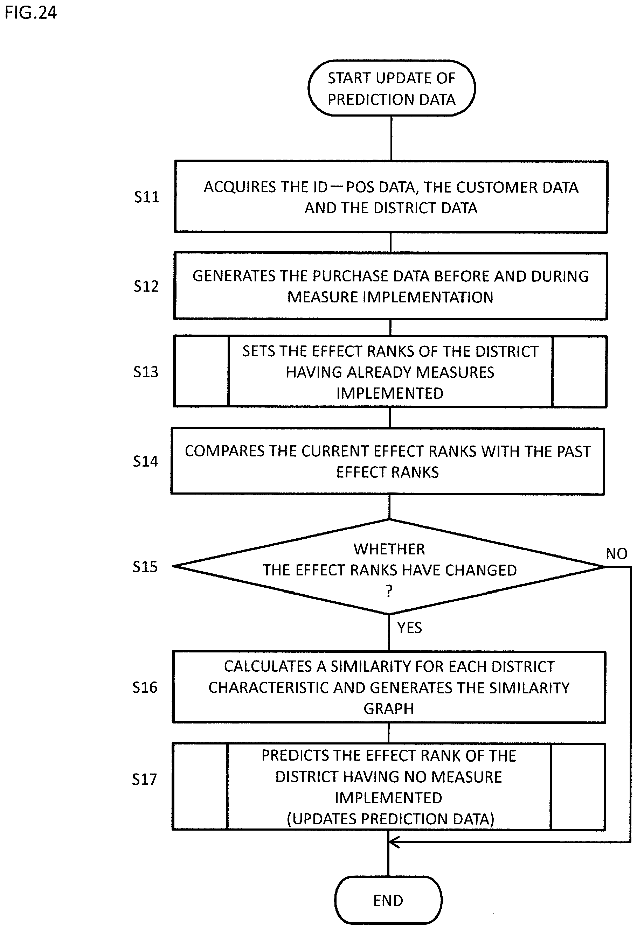

Fig. 24 shows an example of an operation of updating the prediction data 145 by the control unit 13 of the prediction device 1. The prediction device 1 executes the operation shown in Fig. 9 when the prediction data 145 is first generated. The prediction device 1 executes the operation shown in Fig. 24 when the prediction data 145 already exists in the storage unit 14. Steps S11, S12, S13, S16 and S17 of Fig. 24 are the same processes as steps S1, S2, S3, S4 and S5, respectively, of Fig. 9. In this embodiment, it is determined at steps S14 and S15 whether the prediction data 145 needs to be updated. Steps S14 and S15 are an example of update determination.

The data tabulating unit 131 newly acquires the ID-POS data 141, the customer data 142, and the district data 143 (S11). Based on the newly acquired ID-POS data 141, customer data 142, and district data 143, the data tabulating unit 131 generates the purchase data 144A before measure implementation and the purchase data 144B during measure implementation (S12) . The effect rank setting unit 132 sets the current effect ranks of the measures for the district in the trading area of the store having measures already implemented therein (S13). The update determining unit 134 compares the current effect ranks with the past effect ranks (S14). The update determining unit 134 determines whether the effect ranks have changed (S15). For example, the update determining unit 134 determines whether averages of the past and current effect ranks of all the districts are different. If the average of the effect ranks of the all districts has changed, the update determining unit 134 determines that the prediction data 145 needs to be updated, and the process goes to step S16. The prediction data generating unit 133 calculates a similarity between districts for each district characteristic and generates the similarity graph 45 (S16) . The prediction data generating unit 133 reconstructs the prediction graph 450 by combining the similarity graphs for each district characteristic and predicts the effect rank of the district in the trading area of the store having no measure implemented therein (S17) . As a result, the prediction data 145 is updated.

Specifically, when the update determining unit 134 determines to update the prediction data 145, the prediction data generating unit 133 applies the calculation described in "2.5 Prediction of Probability of Effect Rank of Non-Implemented District" described above again at the time of reconstruction of the prediction graph 450 to update the importance and the predicted value of the probability of the effect rank.

As described above, by updating the prediction data 145 when the effect ranks have changed, a recommendation can be made in accordance with the season, for example.

5. Effects and Supplements

The prediction device 1 of this embodiment includes the storage unit 14 storing the purchase data 144 showing an effect of measures in a store having measures already implemented therein and the control unit 13 predicting an effect of the measures in a store having no measure implemented therein. The store having measures already implemented therein is an example of a first target having measures already implemented therein. The store having no measure implemented therein is an example of a second target having no measure implemented therein. The purchase data 144 is an example of the measure implementation information indicative of an effect of the measures. The control unit 13 constructs the prediction graphs 450A to 450D made up of a plurality of nodes including a node of at least one district associated with a store of the first target and a node of at least one district associated with a store of the second target, and a plurality of links connecting the nodes based on a similarity between the nodes. The node of at least one district associated with a store of the first target is an example of a first node. The node of at least one district associated with a store of the second target is an example of a second node. The prediction graphs 450A to 450D are an example of a first graph. The control unit 13 determines a degree of the effect of the measures in the node of the measures-implemented district based on the purchase data 144 and propagates the degree of the effect of the measures by using the node of the measures-implemented district as a base point to a node of the non-implemented district in the prediction graphs 450A to 450D. As a result, even when measures are implemented in a small number of stores, an effective measure in the non-implemented district can be predicted. In the label propagation method, the degree of the effect of the measures is sequentially propagated from a district with higher similarity, and therefore, even if the similarity between the implementation and non-implemented districts is low, an effective measure in the non-implemented district can be predicted.

Specifically, the degree of the effect of the measures includes a plurality of effect ranks, and the control unit 13 propagates each of the effect ranks to the second node and calculates a probability of each of the effect ranks in the second node. The control unit 13 determines the effect rank having the highest probability as the effect rank of the second node out of the plurality of effect ranks. As a result, the effect ranks of the measures can accurately be predicted for each district.

The plurality of nodes is associated with a plurality of characteristics. The plurality of characteristics is the population, the average customer spend, the male/female ratio, and the sales, for example. The control unit 13 generates for each of the characteristic the similarity graph 45 made up of a plurality of nodes and a plurality of links connecting the nodes based on a similarity of each of the characteristics. The similarity graph 45 is an example of a second graph. The control unit 13 calculates an importance of each of the characteristics for each rank and combines the similarity graphs 45 of the respective characteristics based on the importance into one graph to generate the prediction graphs 450A to 450D. As a result, the effect rank is propagated in accordance with the characteristics of the districts, so that the effect ranks of the measures can accurately be predicted for each district.

The control unit 13 determines whether to recommend measures to the store of the second target based on the degree of the effect of the measures for the second node. For example, A-rank and B-rank measures are recommended to the store. As a result, only effective measures can be recommended to the store.

When the prediction target store is associated with a trading area including two or more districts, the control unit 13 determines the effect rank of the trading area in accordance with the effect ranks of the districts in the trading area. The trading area is an example of a group. The control unit 13 determines whether to recommend measures to the prediction target store in accordance with the effect rank of the trading area. As a result, effective measures can be recommended to the store.

The control unit 13 generates the prediction graph 450 for each of a plurality of measures, propagates the degree of the effect of the measures, and determines a recommended measure from the plurality of measures based on the degree of the effect of the measures. As a result, an effective measure can be recommended to the store out of the plurality of measures.

(Other Embodiments)

As described above, the embodiment has been described as exemplification of the techniques disclosed in the present application. However, the techniques in the present disclosure are not limited thereto and are also be applicable to embodiments with modifications, replacements, additions, omissions, etc. made as appropriate. Therefore, other embodiments will hereinafter be exemplified.

In the example described in the embodiment, the terminal device 2 is connected to the prediction device 1 via the Internet. However, the prediction device 1 may be located together with the terminal device 2 in each store and may be connected to the terminal device 2. In the embodiment, the prediction system 100 is made up of the prediction device 1 and the terminal device 2. However, all the functions of the prediction system 100 may be implemented by one device. A portion of the functions of the prediction device 1 described in the embodiment may be performed by another prediction device. For example, separate devices may act as a prediction device including the data tabulating unit 131, the effect rank setting unit 132, the prediction data generating unit 133, and the update determining unit 134, which are functions at the time of learning, and a prediction device including the trading area setting unit 135, the purchase data supplementing unit 136, the prediction data updating unit 137, and the measure recommending unit 138, which are functions at the time of recommendation.

In the embodiment, the effect rank of the measures-implemented district is set based on a change in sales before and during the measure implementation; however, the effect rank may be set by another method. For example, the effect rank may be set based on any one of the sales, the number of visitors, the average customer spend, an arrival ratio, a purchase ratio, and a visiting ratio before and during the measure implementation. In this case, the arrival ratio=the number of persons arriving at a shelf/the number of visitors, the purchase ratio=the number of persons purchasing commodities/the number of visitors, and the visiting ratio=the number of visitors of a district/the population of the district are used. Instead of directly using the numerical values of the sales, the number of visitors, the average customer spend, etc. obtained from the store, the values obtained by correcting the obtained numerical values with a seasonal adjustment method etc. may be used. For example, the numerical values may be corrected by the Census Bureau method, the MITI method, the monthly average method, the Parsons method, or the twelvemonth moving average method.

In the example described in the embodiment, the node 451 is a district and the link 452 is a similarity of the population, the number of households, the average customer spend, etc. of the district in the prediction graph 450 for propagating the effect rank of the measure. However, the node 451 and the link 452 are not limited to the embodiment. For example, the node 451 may be a store, and the link 452 may be a similarity of sales between stores or a similarity of a sales rate in each category. The node 451 may be a customer, and the link 452 may be a similarity of a customer's purchase amount or a purchase rate in each category.

In the embodiment, a total population is calculated for each effect rank at the time of recommendation, and the effect rank with the largest population is set as the effect rank of the trading area. However, the criteria for setting the effect rank of the trading area are not limited to the total population. For example, the number of households, a sales scale, etc. may be summed up for each effect rank, and the effect rank with the maximum value may be set as the effect rank of the trading area.

In the embodiment, the past effect rank and the current effect rank of the measure-implemented district are compared to determine whether the prediction data 145 needs to be updated. However, the determination of update is not limited to the embodiment. The update determining unit 134 may determine the necessity of update of the prediction data 145 based on at least one of the newly acquired ID-POS data 141, customer data 142, and district data 143. The update determining unit 134 may determine the necessity of update of the prediction data 145 based on the newly generated purchase data 144. For example, the update determining unit 134 may reconstruct the prediction graph 450 and update the prediction data 145 when a purchase rate of a specific commodity or a commodity category is changed by a predetermined value or more. It may be determined that the update is necessary when the value of the effect of the measures is changed by a predetermined value or more. The update determining unit 134 may generate data showing business conditions such as a sales scale from the purchase data 144 and may reconstruct the prediction graph 450 to update the prediction data 145 when a change in the business conditions is detected. The update determining unit 134 may exclude a district where purchased commodities are biased, from the construction of the prediction graph 450. The prediction graph 450 may be reconstructed when a change occurs in proportion of occupations of residents or proportion of foreigners in a district. Depending on the characteristics of the residents of the districts, for example, a district with a high proportion of a particular occupation may be excluded from the reconstruction of the prediction graph 450. The necessity of update may be determined depending on an amount of change in media usage time of residents. The media usage time is, for example, an average TV viewing time, an Internet usage time, a smartphone usage time, or a newspaper subscription rate. The update determining unit 134 may determine the necessity of update based on time information indicative of the month, season, day of the week, or year. For example, the prediction graph 450 may monthly be reconstructed. The update determining unit 134 may update the prediction data 145 at the timing designated by the user via the input unit 11 or the communication unit 12. The effect on sales of seasonal commodities etc. may be predicted, and the reconstruction of the prediction graph 450 may be terminated when a prediction error becomes smaller than a predetermined threshold value. By reconstructing the prediction graph 450 in accordance with the seasonality, a recommendation can be made in accordance with the season.

In the example described in the embodiment, the prediction graph 450 for predicting the effect of the measures of each district is generated to recommend a measure to the store; however, the configuration of the prediction graph 450 and an item to be recommended are not limited to the embodiment. As described below, the prediction graphs having other configurations may be generated. Items other than the measures may be recommended.

Modification 1: The prediction graph may be generated by using a customer as the target, a similarity of a customer's purchase amount or a purchase rate in each category as the link, and a commodity purchase tendency as the label. This prediction graph may be used to recommend commodities at retail stores.

Modification 2: The prediction graph may be generated by using a commodity as the target, a similarity of sales, sales numbers, the purchase ratio, etc. as the link, and an effect of the measures on each commodity as the label. This prediction graph may be used to recommend measures for a category area such as fruits and vegetables in retail stores.

Modification 3: The prediction graph may be generated by using a factory or a logistics base (logistics sorting place) as the target, a similarity of demographics such as age and gender of employees, age of a building, climate conditions, facility specifications as the link, and an effect rank according to a change in production efficiency or a change in throughput as the label. This prediction graph may be used to recommend measures for improving work efficiency in factories or logistics bases. The measures for improving work efficiency are a layout change and a work system, for example. Modification 4: The prediction graph may be generated by using a department as the target, a similarity of age, gender, years of service, etc. of employees in the department as the link, and an effect rank according to a change in work efficiency at the time of system renewal as the label. This prediction graph may be used to recommend renewal of an information system in companies or municipalities. Modification 5: The prediction graph may be generated by using an entertainment facility as the target, a similarity of age, gender, nationality, or the number of visitors as the link, and an effect rank according to a change in customer attraction rate or sales increase rate as the label. This prediction graph may be used to recommend measures to entertainment facilities such as zoos or aquariums. Modification 6: The prediction graph may be generated by using a resident or a town as the target, a similarity of a population, a male/female ratio of the population, or the number of accidents as the link, and an effect of an accident prevention activity or a crime prevention activity as the label. This prediction graph may be used to recommend measures to companies or municipalities. Other modifications: Instead of measures, recommendation may be made for a) a driving method to a driver of an automobile, b) a school of choice at the time of entrance examination, c) a travel destination or travel plan according to residence characteristics, d) a news site according to an application usage rate, e) a place or content of a commercial according to viewer characteristics, f) a place or content of an advertisement according to passerby characteristics, g) exercise based on daily exercise characteristics or geographical information, h) a behavior such as eating, sleeping, or walking according to physical conditions, biological signals, or surrounding environment.

(Overview of Embodiments)

(1) The prediction device of the present disclosure includes a storage unit storing measure implementation information showing an effect of the measures on a first target having measures already implemented therein, and a control unit predicting an effect of measures on a second target having no measure implemented therein based on the measure implementation information; the control unit constructs a first graph made up of a plurality of nodes including at least one first node associated with the first target and at least one second node associated with the second target, and a plurality of links connecting the nodes based on a similarity between the nodes; and based on the measure implementation information, the control unit determines a degree of the effect of the measures on the first node and propagates the degree of the effect of the measures to the second node by using the first node as a base point in the first graph.

As a result, even when measures are implemented in a small number of the first targets, an effective measure in the second target having no measure implemented therein can be predicted.

(2) In the prediction device of (1), the control unit may determine whether to recommend a measure to the second target based on a degree of the effect of the measures on the second node.

As a result, an effective measure can be recommended.

(3) In the prediction device of (1) or (2), the control unit may determine necessity of update of prediction based on at least one of a plurality of characteristics and, when determining to update, may recalculate a link strength of the first graph to determine the degree of the effect of the measures again.

(4) In the prediction device of any one of (1) to (3), the degree of the effect of the measures may include a plurality of ranks, and the control unit may propagate each of the ranks to the second node, may calculate a probability of each of the ranks in the second node, and may determine the rank having the highest probability as the rank of the second node out of the plurality of ranks.

As a result, an effective measure can be predicted based on the ranks, so that a plurality of measures can be recommended.

(5) In the prediction device of (4), the plurality of nodes may be associated with a plurality of characteristics, and the control unit may generate for each of the characteristics a second graph made up of the plurality of nodes and a plurality of links connecting the nodes based on a similarity of each of the characteristics, may calculate an importance of each of the characteristics for each of the ranks, and may combine the second graphs of the respective characteristics based on the importance into one graph to generate the first graph.

As a result, the ranks are propagated based on the similarity of the plurality of characteristics.

(6) In the prediction device of (4), when the second target is associated with a group including two or more nodes, the control unit may determine the rank of the group in accordance with the ranks of the nodes in the group and may determine whether to recommend the measure to the second target in accordance with the rank of the group.

As a result, effective measures can be recommended when the second target is associated with a plurality of nodes.

(7) In the prediction device according to any one of (1) to (4), the first target and the second target may be stores, and plurality of the nodes may correspond to a store, a district in a trading area of the store, or a customer visiting the store.

As a result, effective measures can be recommended to the store.

(8) In the prediction device of (7), each of the nodes may correspond to the district, and the similarity between the nodes may be a similarity related to at least one of a population, the number of households, a male/female ratio of the population, sales, and an average customer spend in the district.

(9) In the prediction device of (8), the control unit may determine the degree of the effect of the measures on the first node based on a difference in at least one of the sales, the number of visitors, and the average customer spend before and after implementation of the measure.

(10) In the prediction device of (8), the trading area of the store of the second target may include one or more districts, and the control unit may determine a degree of the effect of the measures on the trading area in accordance with a degree of the effect of the measures on the districts included in the trading area and may determine whether to recommend the measure to the store of the second target in accordance with the degree of the effect of the measures on the trading area.

(11) In the prediction device of (2), the control unit may generate the first graph for each of a plurality of measures to propagate a degree of the effect of the measures and may determine a recommended measure from the plurality of measures based on the degree of the effect of the measures.

As a result, a plurality of measures can be recommended.

(12) In the prediction device of any one of (1) to (4), the first target and the second target may be factories, and the plurality of nodes may correspond to factories, ages of buildings, weather conditions, specifications of facilities, or employees working in the factories.

(13) In the prediction device of any one of (1) to (4), the first target and the second target may be logistics bases, and the plurality of nodes may correspond to logistics bases, ages of buildings, weather conditions, specifications of facilities, or employees working in the logistics bases.

(14) The prediction method of the present disclosure is a prediction method of predicting an effect of measures on a second target having no measure implemented therein, by an arithmetic unit, based on measure implementation information showing an effect of measures on a first target having a measure already implemented therein, the method comprising the steps of: constructing a graph made up of a plurality of nodes including at least one first node associated with the first target and at least one second node associated with the second target, and a plurality of links connecting the nodes based on a similarity between the nodes (S502); determining a degree of the effect of the measures on the first node based on the measure implementation information (S3); and propagating the degree of the effect of the measures on the second node by using the first node as a base point in the graph (S503).

The prediction device and the prediction method according to all claims of the present disclosure are implemented by cooperation etc. with hardware resources, for example, a processor, a memory, and a program.

INDUSTRIAL APPLICABILITY

The prediction device of the present disclosure is useful as a device recommending an effective measure to a store having no measure implemented therein, for example.

EXPLANATIONS OF LETTERS OR NUMERALS

| | |
|---|---|
| 1 | prediction device |
| 2 | terminal devices |
| 11, 21 | input unit |
| 12, 22 | communication unit |
| 13, 23 | control unit |
| 14, 24 | storage unit |
| 15, 26 | bus |
| 25 | display |
| 100 | prediction system |
| 131 | data tabulating unit |
| 132 | effect rank setting unit |
| 133 | prediction data generating unit |
| 134 | update determining unit |
| 135 | trading area setting unit |
| 136 | purchase data supplementing unit |
| 137 | prediction data updating unit |
| 138 | measure recommending unit |

**Claims**

**1.** A prediction device comprising:

a storage unit storing measure implementation information showing an effect of measures on a first target having measures already implemented therein; and

a control unit predicting an effect of measures on a second target having no measure implemented therein based on the measure implementation information, wherein

the control unit constructs a first graph made up of a plurality of nodes including at least one first node associated with the first target and at least one second node associated with the second target, and a plurality of links connecting the nodes based on a similarity between the nodes, and

based on the measure implementation information, the control unit determines a degree of the effect of the measures on the first node and propagates the degree of the effect of the measures on the second node by using the first node as a base point in the first graph.

2. The prediction device according to claim 1, wherein the control unit determines whether to recommend a measure to the second target based on a degree of the effect of the measures on the second node.

3. The prediction device according to claim 1 or 2, wherein
the control unit determines necessity of update of prediction based on at least one of a plurality of characteristics and, when determining to update, recalculates a link strength of the first graph to determine the degree of the effect of the measures again.

4. The prediction device according to any one of claims 1 or 3, wherein
the degree of the effect of the measures includes a plurality of ranks, and wherein
the control unit propagates each of the ranks to the second node, calculates a probability of each of the ranks in the second node, and determines the rank having the highest probability as the rank of the second node out of the plurality of ranks.

5. The prediction device according to claim 4, wherein
the plurality of nodes is associated with a plurality of characteristics, wherein
the control unit generates for each of the characteristics a second graph made up of the plurality of nodes and a plurality of links connecting the nodes based on a similarity of each of the characteristics, and wherein
the control unit calculates an importance of each of the characteristics for each of the ranks and combines the second graphs of the respective characteristics based on the importance into one graph to generate the first graph.

6. The prediction device according to claim 4, wherein
when the second target is associated with a group including two or more nodes, the control unit determines the rank of the group in accordance with the ranks of the nodes in the group and determines whether to recommend the measure to the second target in accordance with the rank of the group.

7. The prediction device according to any one of claims 1 to 4, wherein
the first target and the second target are stores, and wherein
the plurality of nodes corresponds to a store, a district in a trading area of the store, or a customer visiting the store.

8. The prediction device according to claim 7, wherein
each of the plurality of nodes corresponds to the district, and wherein
the similarity between the nodes is a similarity related to at least one of a population, the number of households, a male/female ratio of the population, sales, and an average customer spend in the district.

9. The prediction device according to claim 8, wherein
the control unit determines the degree of the effect of the measures on the first node based on a difference in at least one of the sales, the number of visitors, and the average customer spend before and after implementation of the measure.

10. The prediction device according to claim 8, wherein
the trading area of the store of the second target includes one or more districts, wherein
the control unit determines a degree of the effect of the measures in the trading area in accordance with a degree of the effect of the measures in the districts included in the trading area, and wherein the control unit determines whether to recommend the measure to the store of the second target in accordance with the degree of the effect of the measures in the trading area.

**11.** The prediction device according to claim 2, wherein
the control unit generates the first graph for each of a plurality of measures to propagate a degree of the effect of the measures and determines a recommended measure from the plurality of measures based on the degree of the effect of the measures.

**12.** The prediction device according to any one of claims 1 to 4, wherein
the first target and the second target are factories, and wherein
the plurality of nodes corresponds to the factories, ages of buildings, weather conditions, specifications of facilities, or employees working in the factories.

**13.** The prediction device according to any one of claims 1 to 4, wherein
the first target and the second target are logistics bases, and wherein
the plurality of nodes corresponds to the logistics bases, ages of buildings, weather conditions, specifications of facilities, or employees working in the logistics bases.

**14.** A prediction method of predicting, based on measure implementation information showing an effect of measures on a first target having a measure already implemented therein, an effect of measures in a second target having no measure implemented therein, by an arithmetic unit, the method comprising the steps of:

constructing a graph made up of a plurality of nodes including at least one first node associated with the first target and at least one second node associated with the second target, and a plurality of links connecting the nodes based on a similarity between the nodes;
determining a degree of the effect of the measures on the first node based on the measure implementation information; and
propagating the degree of the effect of the measures on the second node by using the first node as a base point in the graph.

**15.** A program that causes a computer to execute the prediction method according to claim 14.

FIG.1

100

FIG.2

PREDICTION DEVICE
(AT THE TIME OF LEARNING)

1

14

STORAGE UNIT 141

ID-POS DATA

142

CUSTOMER
DATA

143

DISTRICT
DATA

144

PURCHASE
DATA

145

PREDICTED
DATA

13

CONTROL UNIT

131

DATA TABULATING
UNIT

132

EFFECT RANK
SETTING UNIT
(MEASURE-
IMPLEMENTATED
DISTRICT)

134

UPDATE
DETERMINING
UNIT

133

PREDICTED DATA
GENERATING UNIT
(NON-
IMPLEMENTATED
DISTRICT)

FIG.3

141

| ID-POS DATA | | | | | |
|---|---|---|---|---|---|
| DATE AND TIME | CUSTOMER ID | PURCHASED COMMODITY | UNIT PRICE | NUMBER OF PURCHASED COMMODITIES | TOTAL PRICE |
| 2018/3/2 3:58 PM | 105 | BEER-A | 200 | 2 | 400 |
| 2018/3/2 3:58 PM | 113 | LIQUOR-B | 100 | 1 | 100 |
| 2018/3/2 4:02 PM | 108 | SNACK-C | 300 | 1 | 300 |
| 2018/3/2 4:02 PM | 104 | GUM-D | 100 | 2 | 200 |
| 2018/3/2 4:03 PM | 112 | SALAD-E | 300 | 3 | 900 |
| 2018/3/2 4:05 PM | 111 | PORK-F | 400 | 2 | 800 |
| 2018/3/2 4:10 PM | 105 | WHISKY-G | 1,000 | 3 | 3,000 |
| 2018/3/2 4:11 PM | 103 | WATER-H | 100 | 2 | 200 |
| 2018/3/2 4:15 PM | 108 | JUICE-I | 200 | 2 | 400 |
| 2018/3/2 4:18 PM | 105 | MILK-J | 200 | 2 | 400 |
| 2018/3/2 4:18 PM | 111 | VEGETABLE-K | 300 | 2 | 600 |
| 2018/3/2 4:18 PM | 113 | SEAFOOD-L | 500 | 1 | 500 |
| 2018/3/2 4:20 PM | 104 | BREAD-M | 100 | 3 | 300 |
| 2018/3/2 4:22 PM | 107 | FOOD-N | 400 | 3 | 1,200 |
| 2018/3/2 4:25 PM | 105 | FOOD-O | 300 | 2 | 600 |
| 2018/3/2 4:26 PM | 109 | CANNING-P | 200 | 1 | 200 |
| 2018/3/2 4:27 PM | 113 | FROZEN FOOD-Q | 300 | 1 | 300 |
| 2018/3/2 4:30 PM | 112 | ICE CREAM-R | 200 | 2 | 400 |
| 2018/3/2 4:32 PM | 105 | JUICE-S | 300 | 2 | 600 |
| 2018/3/2 4:32 PM | 102 | FOOD-T | 600 | 1 | 600 |
| 2018/3/2 4:33 PM | 104 | TEA-U | 100 | 3 | 300 |
| 2018/3/2 4:35 PM | 113 | COFFEE-V | 200 | 2 | 400 |
| 2018/3/2 4:39 PM | 106 | CANDY-W | 100 | 2 | 200 |
| 2018/3/2 4:43 PM | 108 | CAKE-X | 300 | 2 | 600 |
| 2018/3/2 4:44 PM | 110 | BEER-Y | 1,800 | 2 | 3,600 |
| 2018/3/2 4:46 PM | 108 | FRUIT-Z | 100 | 1 | 100 |
| 2018/3/2 4:47 PM | 112 | FOOD-AA | 200 | 1 | 200 |
| 2018/3/2 4:56 PM | 107 | PASTA-BB | 300 | 2 | 600 |
| 2018/3/2 4:57 PM | 113 | TEA-CC | 600 | 3 | 1,800 |
| 2018/3/2 5:03 PM | 105 | FOOD-DD | 300 | 2 | 600 |
| 2018/3/2 5:04 PM | 107 | SAKE-EE | 1,200 | 3 | 3,600 |
| 2018/3/2 5:04 PM | 102 | WINE-FF | 1,500 | 2 | 3,000 |

FIG.4

142

| CUSTOMER DATA | | | |
|---|---|---|---|
| CUSTOMER ID | GENDER | ZIP CODE | BIRTH MONTH |
| 101 | M | 5710050 | 1952/03/21 |
| 102 | F | 5710044 | 1966/06/18 |
| 103 | F | 5710056 | 1980/08/06 |
| 104 | F | 5730092 | 1976/09/17 |
| 105 | M | 5400001 | 1997/01/31 |
| 106 | F | 8120017 | 2003/05/03 |
| 107 | M | 1050021 | 1975/06/27 |
| 108 | M | 2240054 | 1964/10/11 |
| 109 | F | 5710050 | 1957/09/04 |
| 110 | M | 5710044 | 1971/08/28 |
| 111 | F | 5710056 | 1976/02/26 |
| 112 | F | 5730092 | 1934/07/15 |
| 113 | M | 5400001 | 1944/12/14 |

FIG.5

143

| DISTRICT DATA | | | | |
|---|---|---|---|---|
| ZIP CODE | DISTRICT NAME | POPULATION | NUMBER OF HOUSEHOLDS | MALE/FEMALE RATIO |
| 5710050 | MORIGUCHI | 1,000 | 250 | 0.4 |
| 5710044 | MINAMIKADOMA | 1,200 | 500 | 0.6 |
| 5710056 | KITAKADOMA | 600 | 200 | 0.5 |
| 5730092 | HIRAKATA | 300 | 90 | 0.6 |
| 5400001 | KYOUBASHI | 100 | 50 | 0.4 |
| 8120017 | MINOSHIMA | 900 | 180 | 0.6 |
| 1050021 | SHIODOME | 300 | 120 | 0.5 |
| 2240054 | SAEDO | 400 | 150 | 0.6 |

FIG.6

144A

| PURCHASE DATA (BEFORE MEASURE IMPLEMENTATION) | | | | | | |
|---|---|---|---|---|---|---|
| ZIP CODE | DISTRICT NAME | POPULATION | NUMBER OF HOUSEHOLDS | MALE/FEMALE RATIO | SALES | AVERAGE CUSTOMER SPEND |
| 5710050 | MORIGUCHI | 1,000 | 250 | 0.4 | 400 | 400 |
| 5710044 | MINAMIKADOMA | 1,200 | 500 | 0.6 | 1,500 | 500 |
| 5710056 | KITAKADOMA | 600 | 200 | 0.5 | 4,400 | 1,467 |
| 5730092 | HIRAKATA | 300 | 90 | 0.6 | 6,900 | 1,150 |
| 5400001 | KYOUBASHI | 100 | 50 | 0.4 | 5,100 | 464 |
| 8120017 | MINOSHIMA | 900 | 180 | 0.6 | 3,000 | 3,000 |
| 1050021 | SHIODOME | 300 | 120 | 0.5 | 800 | 267 |
| 2240054 | SAEDO | 400 | 150 | 0.6 | 4,900 | 1,225 |

FIG.7

144B

| PURCHASE DATA (DURING MEASURE IMPLEMENTATION) | | | | | | |
|---|---|---|---|---|---|---|
| ZIP CODE | DISTRICT NAME | POPULATION | NUMBER OF HOUSEHOLDS | MALE/FEMALE RATIO | SALES | AVERAGE CUSTOMER SPEND |
| 5710050 | MORIGUCHI | 1,000 | 250 | 0.4 | 600 | 600 |
| 5710044 | MINAMIKADOMA | 1,200 | 500 | 0.6 | 2,000 | 600 |
| 5710056 | KITAKADOMA | 600 | 200 | 0.5 | 5,200 | 1,600 |
| 5730092 | HIRAKATA | 300 | 90 | 0.6 | 7,200 | 1,200 |

FIG.8

145

PREDICTION DATA OF MEASURE N

PREDICTION DATA OF MEASURE 2

PREDICTION DATA OF MEASURE 1

451

DISTRICT -d RANK-A PROBABILITY 1.0

452

DISTRICT -e RANK-B PROBABILITY 0.6

DISTRICT -f RANK-C PROBABILITY 0.4

453

DISTRICT -a RANK-D PROBABILITY 0.7

DISTRICT -c RANK-A PROBABILITY 0.9

DISTRICT -g RANK-D PROBABILITY 0.7

DISTRICT -b RANK-B PROBABILITY 0.5

DISTRICT -h RANK-D PROBABILITY 1.0

450

FIG.9

```
        ╭──────────────────────╮
        │  START GENERATION OF │
        │   PREDICTION DATA    │
        ╰──────────────────────╯
                   │
  ┌────────────────────────────────────────────┐
S1│  ACQUIRES THE ID—POS DATA, THE CUSTOMER     │
  │    DATA, AND THE DISTRICT DATA              │
  └────────────────────────────────────────────┘
                   │
  ┌────────────────────────────────────────────┐
S2│  GENERATES THE PURCHASE DATA BEFORE AND     │
  │     DURING MEASURE IMPLEMENTATION           │
  └────────────────────────────────────────────┘
                   │
  ┌────────────────────────────────────────────┐
S3│        SETS AN EFFECT RANK FOR THE          │
  │      MEASURES IMPLEMENTED DISTRICTS         │
  └────────────────────────────────────────────┘
                   │
  ┌────────────────────────────────────────────┐
S4│  CALCULATES A SIMILARITY BETWEEN DISTRICTS  │
  │  FOR EACH DISTRICT CHARACTERISTIC AND       │
  │     GENERATES A SIMILARITY GRAPH            │
  └────────────────────────────────────────────┘
                   │
  ┌────────────────────────────────────────────┐
S5│     PREDICTS AN EFFECT RANK OF NON-         │
  │        IMPLEMENTED DISTRICTS                │
  │     (GENERATES A PREDICTION DATA)           │
  └────────────────────────────────────────────┘
                   │
             ╭───────────╮
             │    END    │
             ╰───────────╯
```

FIG.10

```
        ┌─────────────────────────┐
        │   START  SETTING  EFFECT │
        │   RANK FOR MEATURES      │
        │   IMPLEMENTED DISTRICT   │
        └─────────────────────────┘
                    │
        ┌─────────────────────────────────┐
        │ CALCULATES THE VALUE CONCERNING │
        │ EFFECTS OF THE MEASURES BASED ON│
  S301  │ THE PURCHASE DATA BEFORE AND    │
        │ DURING MEASURE IMPLEMENTATION   │
        └─────────────────────────────────┘
                    │
        ┌─────────────────────────────────┐
        │ DETERMINES THE EFFECT RANK BASED│
  S302  │ ON THE VALUE CONCERNING EFFECTS OF│
        │ THE MEASURES                    │
        └─────────────────────────────────┘
                    │
        ┌─────────────────────────────────┐
  S303  │ SETS A PROBABILITY OF RANK IN   │
        │ ACCORDANCE WITH THE EFFECT RANK │
        └─────────────────────────────────┘
                    │
              ┌──────────┐
              │   END    │
              └──────────┘
```

FIG.11

EP 3 786 862 A1

| ZIP CODE | DISTRICT NAME | SALES BEFORE MEASURE IMPLEMENTATION | SALES DURING MEASURE IMPLEMENTATION | VALUE CONCERNING AN EFFECT OF MEASURES | EFFECT RANK |
|---|---|---|---|---|---|
| 5710050 | MORIGUCHI | 400 | 600 | 150.00 | A |
| 5710044 | MINAMIKADOMA | 1,500 | 2,000 | 133.33 | B |
| 5710056 | KITAKADOMA | 4,400 | 5,200 | 118.18 | C |
| 5730092 | HIRAKATA | 6,900 | 7,200 | 104.35 | D |

FIG.12

| ZIP CODE | DISTRICT NAME | EFFECT RANK | RANK -A PROBABILITIES | RANK -B PROBABILITIES | RANK -C PROBABILITIES | RANK -D PROBABILITIES |
|---|---|---|---|---|---|---|
| 5710050 | MORIGUCHI | A | 1.0 | 0 | 0 | 0 |
| 5710044 | MINAMIKADOMA | B | 0 | 1.0 | 0 | 0 |
| 5710056 | KITAKADOMA | C | 0 | 0 | 1.0 | 0 |
| 5730092 | HIRAKATA | D | 0 | 0 | 0 | 1.0 |

EP 3 786 862 A1

FIG.13

144

| PURCHASE DATA (COMMON TO All MEASURES) | | | | | | |
|---|---|---|---|---|---|---|
| ZIP CODE | DISTRICT NAME | POPULATION | NUMBER OF HOUSEHOLDS | MALE/ FEMALE RATIO | SALES BEFORE MEASURE IMPLEMENTATION | AVERAGE CUSTOMER SPEND |
| 5710050 | MORIGUCHI | 1,000 | 250 | 0.4 | 400 | 400 |
| 5710044 | MINAMIKADOMA | 1,200 | 500 | 0.6 | 1,500 | 500 |
| 5710056 | KITAKADOMA | 600 | 200 | 0.5 | 4,400 | 1,467 |
| 5730092 | HIRAKATA | 300 | 90 | 0.6 | 6,900 | 1,150 |
| 5400001 | KYOUBASHI | 100 | 50 | 0.4 | 5,100 | 464 |
| 8120017 | MINOSHIMA | 900 | 180 | 0.6 | 3,000 | 3,000 |
| 1050021 | SHIODOME | 300 | 120 | 0.5 | 800 | 267 |
| 2240054 | SAEDO | 400 | 150 | 0.6 | 4,900 | 1,225 |
| NODE | | LINK | LINK | LINK | LINK | LINK |

45L

45N

45

SIMILARITY GRAPH OF
THE POPULATION

45a

SIMILARITY GRAPH OF
THE NUMBER OF HOUSEHOLDS

45b

SIMILARITY GRAPH OF
THE MALE/FEMALE RATIO

45c

SIMILARITY GRAPH OF
THE SALES

45d

SIMILARITY GRAPH OF
THE AVERAGE CUSTOMER SPEND

45e

FIG.14

START PREDICTION OF EFFECT RANK FOR NON-IMPLEMENTED DISTRICT

S501 — CALCULATES THE IMPORTANCE OF EACH CHARACTERISTIC OF THE DISTRICT

S502 — COMBINES THE SIMILARITY GRAPHS BASED ON AN IMPORTANCE TO CONSTRUCT THE PREDICTION GRAPH

S503 — CALCULATES A PROBABILITY OF AN EFFECT RANK OF A NEIGHBORHOOD NODE IN ACCORDANCE WITH THE LINK STRENGTHS OF THE PREDICTION GRAPHS

S504 — WHETHER THE CALCULATION OF THE PROBABILITIES OF All THE EFFECT RANKS IS COMPLETED FOR THE NEIGHBORHOOD NODES? — NO

YES

S505 — DETERMINES THE EFFECT RANKS FOR THE NEIGHBORHOOD NODES BASED ON THE PROBABILITIES OF THE EFFECT RANKS

S506 — WHETHER THE EFFECT RANKS OF All THE DISTRICTS ARE DETERMINED ? — NO

YES

S507 — STORES THE PREDICTION DATA

END

FIG.15

| | | | | | | | MEASURE 1 | | | | |
|---|---|---|---|---|---|---|---|---|---|---|---|
| ZIP CODE | DISTRICT NAME | POPUL ATION | NUMBER OF HOUSEHOL DS | MALE/ FEMALE RATIO | SALES BEFORE MEASURE IMPLEMENTATION | AVERAGE CUSTOMER SPEND | RANK-A PROBABILITI ES | RANK-B PROBABILI TIES | RANK-C PROBABIL ITIES | RANK-D PROBABILI TIES |
| 5710050 | MORIGUCHI | 1,000 | 250 | 0.4 | 400 | 400 | 1.0 | 0 | 0 | 0 |
| 5710044 | MINAMIKADOMA | 1,200 | 500 | 0.6 | 1,500 | 500 | 0 | 1.0 | 0 | 0 |
| 5710056 | KITAKADOMA | 600 | 200 | 0.5 | 4,400 | 1,467 | 0 | 0 | 1.0 | 0 |
| 5730092 | HIRAKATA | 300 | 90 | 0.6 | 6,900 | 1,150 | 0 | 0 | 0 | 1.0 |
| 5400001 | KYOUBASHI | 100 | 50 | 0.4 | 5,100 | 464 | | | | |
| 8120017 | MINOSHIMA | 900 | 180 | 0.6 | 3,000 | 3,000 | | | | |
| 1050021 | SHIODOME | 300 | 120 | 0.5 | 800 | 267 | | | | |
| 2240054 | SAEDO | 400 | 150 | 0.6 | 4,900 | 1,225 | | | | |
| | NODE | | COMBINED LINK | | | | LABEL | LABEL | LABEL | LABEL |

PREDICTION GRAPH OF THE EFFECT RANK A FOR MEASURE 1

450A

PREDICTION GRAPH OF THE EFFECT RANK B FOR MEASURE 1

450B

450

PREDICTION GRAPH OF THE EFFECT RANK C FOR MEASURE 1

450C

PREDICTION GRAPH OF THE EFFECT RANK D FOR MEASURE 1

450D

EP 3 786 862 A1

# FIG.16

| LINK STRENGTH OF THE SIMILARITY GRAPHS OF THE POPULATION($A_k$) | | | |
|---|---|---|---|
| | MORI GUCHI | MINAMI KADOMA | KITA KADOMA |
| MORI GUCHI | | 0.6 | 0.4 |
| MINAMI KADOMA | 0.7 | | 0.3 |
| KITA KADOMA | 0.6 | 0.4 | |

161

| LINK STRENGTH OF THE SIMILARITY GRAPHS OF THE NUMBER OF HOUSEHOLDS ($A_k$) | | | |
|---|---|---|---|
| | MORI GUCHI | MINAMI KADOMA | KITA KADOMA |
| MORI GUCHI | | 0.2 | 0.8 |
| MINAMI KADOMA | 0.6 | | 0.4 |
| KITA KADOMA | 0.9 | 0.1 | |

| LINK STRENGTH OF THE SIMILARITY GRAPHS OF THE AVERAGE CUSTOMER SPEND ($A_k$) | | | |
|---|---|---|---|
| | MORI GUCHI | MINAMI KADOMA | KITA KADOMA |
| MORI GUCHI | | 0.9 | 0.1 |
| MINAMI KADOMA | 0.9 | | 0.1 |
| KITA KADOMA | 0.5 | 0.5 | |

✖

| | IMPORTANCE DEGREE ($u_k$) |
|---|---|
| POPULATION | 0.5 |
| NUMBER OF HOUSEHOLDS | 0.3 |
| AVERAGE CUSTOMER SPEND | 0.2 |

＝

| LINK STRENGTH OF THE PREDICTION GRAPH($A_{int}$) | | | |
|---|---|---|---|
| | MORI GUCHI | MINAMI KADOMA | KITA KADOMA |
| MORI GUCHI | 0 | 0.54 | 0.46 |
| MINAMI KADOMA | 0.71 | 0 | 0.29 |
| KITA KADOMA | 0.67 | 0.33 | 0 |

FIG.17

FIG.18

| | | | MEASURE 1 | | | | |
|---|---|---|---|---|---|---|---|
| ZIP CODE | DISTRICT NAME | VALUE CONCERNING THE EFFECT OF THE MEASURES | EFFECT RANK | RANK -A PROBABILITIES | RANK -B PROBABILITIES | RANK -C PROBABILITIES | RANK -D PROBABILITIES |
| 5710050 | MORIGUCHI | 150.00 | A | 1.0 | 0 | 0 | 0 |
| 5710044 | MINAMI KADOMA | 133.33 | B | 0 | 1.0 | 0 | 0 |
| 5710056 | KITA KADOMA | 118.18 | C | 0 | 0 | 1.0 | 0 |
| 5730092 | HIRAKATA | 104.35 | D | 0 | 0 | 0 | 1.0 |
| 5400001 | KYOUBASHI | | A | 0.8 | 0.3 | 0.4 | 0.1 |
| 8120017 | MINOSHIMA | | | | | | |
| 1050021 | SHIODOME | | | | | | |
| 2240054 | SAEDO | | | | | | |

EP 3 786 862 A1

FIG.19

(STORE INFORMATION)

1

PREDICTION DEVICE
(TIME OF RECOMMENDATION)

14
STORAGE

13
CONTROL UNIT

135
TRADING AREA
SETTING UNIT

143
DISTRICT
DATA

136
PURCHASE DATA
SUPPLEMENTING
UNIT

144
PURCHASE
DATA

137
PREDICTION DATA
UPDATING UNIT

145
PREDICTION
DATA

138
MEASURE
RECOMMENDING
UNIT

(MEASURE
RECOMMENDATION
INFORMATION)

FIG.20

START
RECOMMENDATION
OF MEASURES

S601 — SETS THE TRADING AREA BASED ON THE PREDICTION TARGET STORE

S602 — WHETHER A NEW DISTRICT IS INCLUDED ? — NO

YES

S603 — ACQUIRES THE DISTRICT DATA OF THE NEW DISTRICT

S604 — SUPPLEMENTS THE PURCHASE DATA

S605 — RECONSTRUCTS THE PREDICTION GRAPH OF EACH MEASURE

S606 — PREDICTS THE EFFECT RANKS OF All THE MEASURES IN THE TRADING AREA

S607 — RECOMMENDS A MEASURE DEPENDING ON THE EFFECT RANK

END

FIG.21

144

| PURCHASE DATA (BEFORE SUPPLEMENT) | | | | | | |
|---|---|---|---|---|---|---|
| ZIP CODE | DISTRICT NAME | POPULATION | NUMBER OF HOUSEHOLDS | MALE/ FEMALE RATIO | SALES | AVERAGE CUSTOMER SPEND |
| 5710050 | MORIGUCHI | 1,000 | 250 | 0.4 | 400 | 400 |
| 5710044 | MINAMIKADOMA | 1,200 | 500 | 0.6 | 1,500 | 500 |
| 5710056 | KITAKADOMA | 600 | 200 | 0.5 | 4,400 | 1,467 |
| 5730092 | HIRAKATA | 300 | 90 | 0.6 | 6,900 | 1,150 |
| 5400001 | KYOUBASHI | 100 | 50 | 0.4 | 5,100 | 464 |
| 8120017 | MINOSHIMA | 900 | 180 | 0.6 | 3,000 | 3,000 |
| 1050021 | SHIODOME | 300 | 120 | 0.5 | 800 | 267 |
| 2240054 | SAEDO | 400 | 150 | 0.6 | 4,900 | 1,225 |
| | | | | | | |
| | | | | | | |

⇩

144

| PURCHASE DATA (AFTER SUPPLEMENT) | | | | | | |
|---|---|---|---|---|---|---|
| ZIP CODE | DISTRICT NAME | POPULATION | NUMBER OF HOUSEHOLDS | MALE/ FEMALE RATIO | SALES | AVERAGE CUSTOMER SPEND |
| 5710050 | MORIGUCHI | 1,000 | 250 | 0.4 | 400 | 400 |
| 5710044 | MINAMIKADOMA | 1,200 | 500 | 0.6 | 1,500 | 500 |
| 5710056 | KITAKADOMA | 600 | 200 | 0.5 | 4,400 | 1,467 |
| 5730092 | HIRAKATA | 300 | 90 | 0.6 | 6,900 | 1,150 |
| 5400001 | KYOUBASHI | 100 | 50 | 0.4 | 5,100 | 464 |
| 8120017 | MINOSHIMA | 900 | 180 | 0.6 | 3,000 | 3,000 |
| 1050021 | SHIODOME | 300 | 120 | 0.5 | 800 | 267 |
| 2240054 | SAEDO | 400 | 150 | 0.6 | 4,900 | 1,225 |
| 7090631 | OKAYAMA | 600 | 140 | 0.5 | 3,375 | 1,059.125 |
| 9940043 | YAMAGATA | 400 | 70 | 0.5 | 3,375 | 1,059.125 |

44A

44B

43

FIG.22

EP 3 786 862 A1

145

| PREDICTION DATA | | | | | |
|---|---|---|---|---|---|
| ZIP CODE | DISTRICT NAME | POPULATION | MEASURE 1 EFFECT RANK | MEASURE 2 EFFECT RANK | . . . |
| 5710050 | MORIGUCHI | 1,000 | B | C | . . . |
| 5710044 | MINAMIKADOMA | 1,200 | A | B | . . . |
| 5710056 | KITAKADOMA | 600 | D | C | . . . |
| 5730092 | HIRAKATA | 300 | A | A | . . . |
| 5400001 | KYOUBASHI | 100 | B | D | . . . |
| 8120017 | MINOSHIMA | 900 | D | A | . . . |
| 1050021 | SHIODOME | 300 | B | B | . . . |
| 2240054 | SAEDO | 400 | B | C | . . . |

TRADING AREA P

TRADING AREA Q

FIG.23

| EFFECT RANK | RECOMMENDATION／NON-RECOMMENDATION |
|---|---|
| A | RECOMMENDATION |
| B | RECOMMENDATION |
| C | NON-RECOMMENDATION |
| D | NON-RECOMMENDATION |

FIG.24

START UPDATE OF
PREDICTION DATA

S11 — ACQUIRES THE ID－POS DATA, THE CUSTOMER DATA AND THE DISTRICT DATA

S12 — GENERATES THE PURCHASE DATA BEFORE AND DURING MEASURE IMPLEMENTATION

S13 — SETS THE EFFECT RANKS OF THE DISTRICT HAVING ALREADY MEASURES IMPLEMENTED

S14 — COMPARES THE CURRENT EFFECT RANKS WITH THE PAST EFFECT RANKS

S15 — WHETHER THE EFFECT RANKS HAVE CHANGED ?    NO

YES

S16 — CALCULATES A SIMILARITY FOR EACH DISTRICT CHARACTERISTIC AND GENERATES THE SIMILARITY GRAPH

S17 — PREDICTS THE EFFECT RANK OF THE DISTRICT HAVING NO MEASURE IMPLEMENTED (UPDATES PREDICTION DATA)

END

## INTERNATIONAL SEARCH REPORT

| | International application No. |
| --- | --- |
| | PCT/JP2019/016261 |

**A. CLASSIFICATION OF SUBJECT MATTER**
Int.Cl. G06Q10/04(2012.01)i, G06Q30/02(2012.01)i

According to International Patent Classification (IPC) or to both national classification and IPC

**B. FIELDS SEARCHED**

Minimum documentation searched (classification system followed by classification symbols)
Int.Cl. G06Q10/00-99/00

Documentation searched other than minimum documentation to the extent that such documents are included in the fields searched
Published examined utility model applications of Japan        1922-1996
Published unexamined utility model applications of Japan      1971-2019
Registered utility model specifications of Japan              1996-2019
Published registered utility model applications of Japan      1994-2019

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| A | JP 6310539 B1 (YAHOO JAPAN CORPORATION) 11 April 2018, paragraphs [0010]-[0066] (Family: none) | 1-15 |
| A | JP 2009-252126 A (TOYOTA CENTRAL R&D LABS., INC.) 29 October 2009, paragraphs [0025]-[0061] (Family: none) | 1-15 |
| A | JP 2015-152974 A (CULTURE CONVENIENCE CLUB CO., LTD.) 24 August 2015, paragraphs [0039]-[0048] (Family: none) | 1-15 |

☐ Further documents are listed in the continuation of Box C.     ☐ See patent family annex.

| | |
| --- | --- |
| \*   Special categories of cited documents:<br>"A"  document defining the general state of the art which is not considered to be of particular relevance<br>"E"  earlier application or patent but published on or after the international filing date<br>"L"  document which may throw doubts on priority claim(s) or which is cited to establish the publication date of another citation or other special reason (as specified)<br>"O"  document referring to an oral disclosure, use, exhibition or other means<br>"P"  document published prior to the international filing date but later than the priority date claimed | "T"  later document published after the international filing date or priority date and not in conflict with the application but cited to understand the principle or theory underlying the invention<br>"X"  document of particular relevance; the claimed invention cannot be considered novel or cannot be considered to involve an inventive step when the document is taken alone<br>"Y"  document of particular relevance; the claimed invention cannot be considered to involve an inventive step when the document is combined with one or more other such documents, such combination being obvious to a person skilled in the art<br>"&"  document member of the same patent family |
| Date of the actual completion of the international search<br>01 July 2019 (01.07.2019) | Date of mailing of the international search report<br>09 July 2019 (09.07.2019) |
| Name and mailing address of the ISA/<br>Japan Patent Office<br>3-4-3, Kasumigaseki, Chiyoda-ku,<br>Tokyo 100-8915, Japan | Authorized officer<br><br>Telephone No. |

Form PCT/ISA/210 (second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2016006621 A